# EUROPÄISCHE PATENTSCHRIFT

(11) **EP 3 681 953 B1**
(45) Veröffentlichungstag und Bekanntmachung des Hinweises auf die Patenterteilung: **14.07.2021**
(21) Anmeldenummer: 18778388.1
(22) Anmeldetag: 13.09.2018
(51) Int. Cl.: C08L 95/00, C08K 5/05, C08K 5/09

(54) **MASSE AUF BITUMENBASIS**
BITUMEN-BASED MATERIAL
MATIÈRE À BASE DE BITUME

(30) Priorität: 13.09.2017 DE 102017008589
(43) Veröffentlichungstag der Anmeldung: 22.07.2020
(73) Patentinhaber: J. Rettenmaier & Söhne GmbH + Co. KG, 73494 Rosenberg (DE)
(72) Erfinder: GÜNTNER, Roland, 73479 Ellwangen (DE)
(74) Vertreter: Dr. Weitzel & Partner
(86) Internationale Anmeldenummer: PCT/EP2018/074737
(87) Internationale Veröffentlichungsnummer: WO 2019/053125

(56) Entgegenhaltungen:
- EP-A1- 0 568 757
- WO-A1-2012/100432
- WO-A1-2016/073442
- CN-A- 105 585 854
- CN-B- 103 102 701
- DE-A1- 1 570 087
- DE-A1- 3 002 371
- DE-A1- 19 501 212
- Amy Epps-Martin ET AL: "THE EFFECTS OF RECYCLING AGENTS ON ASPHALT MIXTURES WITH HIGH RAS AND RAP BINDER RATIOS; PHASE I INTERIM REPORT", TRANSPORTATION RESEARCH BOARD OF THE NATIONAL ACADEMIES, 1. März 2015 (2015-03-01), Seiten 1-184, XP055526882, Texas, USA Gefunden im Internet: URL:http://onlinepubs.trb.org/onlinepubs/n chrp/docs/NCHRP09-58_PhI_InterimReport.pdf [gefunden am 2018-11-26]
- Anonymous: "Soybean oil - Wikipedia", , 13. November 2018 (2018-11-13), Seiten 1-4, XP055523288, Gefunden im Internet: URL:https://en.wikipedia.org/wiki/Soybean_ oil [gefunden am 2018-11-13]
- SEIDEL JOSEPH C ET AL: "Rheological characterization of asphalt binders modified with soybean fatty acids", CONSTRUCTION AND BUILDING MATERIALS, Bd. 53, 2014, Seiten 324-332, XP028612334, ISSN: 0950-0618, DOI: 10.1016/J.CONBUILDMAT.2013.11.087
- ZAUMANIS MARTINS ET AL: "Influence of six rejuvenators on the performance properties of Reclaimed Asphalt Pavement (RAP) binder and 100% recycled asphalt mixtures", CONSTRUCTION AND BUILDING MATERIALS, Bd. 71, 2014, Seiten 538-550, XP029080483, ISSN: 0950-0618, DOI: 10.1016/J.CONBUILDMAT.2014.08.073
- H. WU ET AL: "Effects of the free fatty acid content in yellow grease on performance, carcass characteristics, and serum lipids in broilers", POULTRY SCIENCE, Bd. 90, Nr. 9, 1. September 2011 (2011-09-01), Seiten 1992-1998, XP055527349, Oxford ISSN: 0032-5791, DOI: 10.3382/ps.2010-01298
- Richard Willis ET AL: "Rejuvenators: Bring Life Back to Aging Asphalt Binder", Asphalt Pavement Magazine, 1 July 2015 (2015-07-01), page 36,37,39,41, XP055570550, Retrieved from the Internet: URL:http://collaborativeaggregates.com/wp- content/uploads/2015/07/Asphalt_Pavement_M ag_Rejuvenators_Artcl.pdf [retrieved on 2019-03-18]
- Tony Sylvester ET AL: "Rejuvenation vs. Softening of Recycled Binders", , 13 March 2017 (2017-03-13), pages 1-25, XP055577082, England DOI: 10.1093/fampra/8.3.202 Retrieved from the Internet: URL:https://il-asphalt.org/files/8714/8969 /2569/2017Sylvester.pdf [retrieved on 2019-04-03]
- Anonymous: "Alternative Binders for Sustainable Asphalt Pavements, Transport Research Circular E-C165", , 22 January 2012 (2012-01-22), pages 1-84, XP055208514, Washington D.C., USA Retrieved from the Internet: URL:http://onlinepubs.trb.org/onlinepubs/c irculars/ec165.pdf [retrieved on 2015-08-19]

## Beschreibung

Die Erfindung betrifft eine Masse auf Bitumenbasis enthaltend einen Rejuvenator. Beim Bitumen kann es sich um frisches oder aufbereitetes Bitumen handeln oder um eine Mischung aus diesen beiden. Mit dem Begriff Bitumen sind auch bitumenhaltige Bindemittel gemeint. Die Erfindung betrifft ferner die Verwendung eines Rejuvenators zum Verjüngen einer gealterten bitumenhaltigen Masse oder zum Verzögern des Alterungsprozesses einer solchen.

Die Masse auf Bitumenbasis kann neben Bitumen und Rejuvenator je nach Anwendungszweck und Rezeptur auch weitere organische oder anorganische Massenbestandteile jeglicher Art enthalten. Dabei kann es sich unter anderem um Zusätze wie Cellulose-, Jute-, Hanf-, Sisal-, Flachs-, Stroh-, Baumwoll-, Holzfasern oder Kunstfasern wie Polyolefinfasern oder anorganische Fasern wie Glasfasern handeln. Weitere Zusätze können beispielsweise auch Wachse wie Montanwachse, Fischer-Tropsch-Wachse, Amid-Wachse, Polymer-Wachse, Fettsäurederivate, Polymere wie Plastomere, Elastomere, Duroplaste, Haftvermittler oder anorganische Komponenten wie Zeolithe oder Mineralstoffe in Form von Gesteinskörnungen sein. Eine solche Masse lässt sich für verschiedene Zwecke einsetzen, z. B. für Gebäude, insbesondere aber für einen Straßenbelag auf Basis von Asphalt.

Asphalt ist eine Mischung von Mineralstoffen und bitumenhaltigen Bindemitteln und somit eine Masse auf Bitumenbasis. Bei den Mineralstoffen handelt es sich um Gesteinskörnungen unterschiedlichster Größen. Bei Bitumen kann es sich um ein unmodifiziertes als auch um ein mit qualitätsverbessernden Zusatzstoffen versetztes, sogenanntes modifiziertes Bitumen handeln. Als Zusatzstoffe werden häufig Polymere und Wachse verwendet, aber auch andere organische und/oder anorganische Zusatzstoffe wie Haftvermittler können Verwendung finden. Weiterhin kann das Bitumen oxidiert, verschnitten, gefluxt, emulgiert, usw. sein.

Wie man weiß, unterliegt ein Straßenbelag der genannten Art über die Jahre einem Alterungsprozess. Die Alterung tritt in Erscheinung in Gestalt von Rissen, Brüchigkeit, einem Verlust der Elastizität sowie einem Verlust der Festigkeit. Es entstehen Schlaglöcher und unerwünschte Rauigkeiten; die Ränder des Straßenbelages fransen aus. Der Grund des Alterungsprozesses ist vor allem der Verlust der entscheidenden chemisch-physikalischen Eigenschaften des bitumenhaltigen Bindemittels, wie z. B. der Verlust der visko-elastischen Eigenschaften (Versprödung) oder der Verlust der Klebkraft (Adhäsion).

Die Ursachen sind vor allem klimatischer Natur, nämlich die Einflüsse von Wärme und Kälte, Sauerstoff, UV-Strahlung, Sonne, Wasser und Eis.

Ein Straßenbelag kann sich im Laufe der Zeit derart verschlechtern, dass das Befahren und womöglich die Verkehrssicherheit beeinträchtigt werden.

Ein übliches Verfahren zum Beheben dieses Zustandes besteht darin, den Belag ganz oder teilweise abzufräsen und durch einen neuen Belag zu ersetzen. Das abgefräste Material nennt man auch Ausbauasphalt. Der Ausbauasphalt fällt in großen Mengen als Schutt an. Man kann ihn zum Ausfüllen von Bodensenken verwenden, aber auch wieder aufbereiten, siehe US 2015/0329702 A1 (= D1). Es sind zahlreiche Verfahren zum Aufbereiten bekannt geworden. Der Ausbauasphalt enthält unter anderem Bitumen und Steine. Beim Abfräsen fällt er in größeren und kleineren Stücken an. Dieses Gut wird einer Aufbereitungsanlage zugeführt, wo es zu Asphaltgranulat weiter zerkleinert wird.

Aufgrund des zum Teil bereits zum zweiten und dritten Mal verwendeten Asphalts (zweite und dritte Generation Asphaltgranulat) besteht gerade im Hinblick auf die Bitumenalterung, d. h., auf den Verlust der entscheidenden Eigenschaften des bitumenhaltigen Bindemittels, dringender Handlungsbedarf. Der Alterungsgrad des Bindemittels aus diesen Asphaltgranulaten steigt mit jeder Wiederverwendung nochmals an. Das im Asphaltgranulat vorhandene Bindemittel kann daher nur in begrenztem Maße bei der Herstellung eines neuen Asphaltmischgutes eingebracht werden. Eine Verbesserung der Bindemitteleigenschaften des Asphaltgranulats ist deshalb ein aktuelles und wichtiges Ziel für die Asphaltindustrie. Damit verbunden ist eine höchstmögliche und zugleich prozesssichere Wiederverwendung von Asphaltgranulat und in Folge dessen ein erheblicher wirtschaftlicher Vorteil für alle Asphaltmischgutproduzenten, denn hier können u. a. große Mengen an Frischbitumen und Gestein eingespart werden und es wäre eine höchste Wertschöpfung auch in hochwertigen Schichten möglich. Damit erfolgt ein wesentlicher Beitrag zur ökologischen und ökonomischen Ressourcenschonung.

Bei der Zugabe von Recyclingmaterial in Form von Asphaltgranulat an einer Asphaltmischanlage wird zwischen Kalt- und Warmzugabe unterschieden:
Kaltzugabe ist die Aufbereitung des Asphaltgranulates ohne Wärmezufuhr. Das Asphaltgranulat wird z. B. über ein Band direkt in den Mischer dosiert.

Warmzugabe ist die Aufbereitung des Asphaltgranulates mit Wärmezufuhr über das Paralleltrommelverfahren mit einer gesonderten Vorrichtung. In der Paralleltrommel wird das Asphaltgranulat von 120 bis max. 150 Grad Celsius erwärmt bevor es in den Mischer kommt.

Die Wiederverwendung von Ausbauasphalt bzw. Asphaltgranulat spielt im Asphaltstraßenbau eine wichtige Rolle. Im Hinblick auf die hohen Zugabemengen von Asphaltgranulat bei der Asphaltherstellung hat die Asphalt- bzw. Bitumenalterung eine immer größere Bedeutung.

Eine Lösung liegt im Wiederauffrischen des Altbitumens, d. h., in der möglichst vollständigen Wiederherstellung der ursprünglichen Bitumeneigenschaften. Dies kann durch Zugabe geeigneter Stoffe erreicht werden, sogenannter Rejuvenatoren.

Ein Rejuvenator soll die ursprünglichen Bitumeneigenschaften bestmöglichst wiederherstellen, verjüngt also das über die Jahre gealterte Bitumen. Idealerweise wirkt ein Rejuvenator auch nachhaltig, d. h., die verjüngende Wirkung bleibt über lange Zeit erhalten, so dass eine weitere Alterung gehemmt wird.

Besonders vorteilhaft ist es, wenn ein derartiger Rejuvenator zusätzlich auch bei frischem Bitumen oder bei frisches Bitumen enthaltenden Massen die vorher genannte Hemmung der Alterung bewirkt.

Bei den bisher bekannten Rejuvenatoren handelt es sich um Flüssigkeiten wie z. B. Mineralöle und Pflanzenöle, die bei Zugabe das Altbitumen weicher machen.

Gemäß WO 2010/110651 A1 (= D2) wird als Rejuvenator für Recyclingasphalte ein Cashewnuss-Öl (CNSL) beschrieben.

Gemäß WO 2008/084014 (= D3) wird als Rejuvenator für Recyclingasphalte eine Zusammensetzung aus Palmöl und Bitumen beschrieben.

Gemäß US 7,008,670 B1 (= D4) werden als Rejuvenatoren für Recyclingasphalte Produkte aus Sojabohnen wie z. B. Sojabohnen-Öl beschrieben.

Gemäß US 2008/0041276 A1 (= D5) werden als Rejuvenatoren für Recyclingasphalte Mineralöle, pflanzliche Öle und Ester-funktionalisierte Rejuvenatoren beschrieben.

Gemäß WO 2013/090283 (= D6) wird ein Ester-funktionalisierter Rejuvenator für Recyclingasphalte beschrieben.

Gemäß US 2015/0329702 A1 (= D1) wird als Rejuvenator ein Rückstand aus der Öl- und Fettaufarbeitung für Recyclingasphalte beschrieben. Es handelt sich hierbei um ein Abfallprodukt, welches nach dem Entfernen der Fettsäuren aus Ölen und Fetten bei einer Extraktion zurückbleibt. In Absatz [0083] dieser Schrift wird von der Verwendung von Stearinsäure abgeraten und stattdessen die Verwendung von Ölrückständen und Fetten empfohlen.

Gemäß CN 104151848 A (= D7) wird eine bitumenhaltige Masse mit einer Vielzahl von Bestandteilen, unter anderem Stearinsäure, beschrieben. Dabei geht es um sogenannten Reparaturasphalt, der kalt verarbeitet wird, d. h., unter einer Temperatur von 50 °C. Der Asphalt liegt in Gestalt einer Öl-Wasser-Emulsion vor. Damit der Asphalt verarbeitet werden kann, muss er eine niedrige Viskosität und somit eine hohe Liquidität aufweisen. Deshalb wird ihm die genannte Vielzahl von weiteren Komponenten zugefügt, unter anderem auch ein relativ hoher Anteil von Stearinsäure. Es geht in der genannten Schrift somit nur um Modalitäten des Aufbringens von Asphalt an einer Baustelle und nicht um Probleme des Alterns einer Straßendecke.

Der Erfindung liegt die Aufgabe zugrunde, eine Masse auf Bitumenbasis anzugeben, mit einem Rejuvenator, der ein über die Jahre gealtertes Bitumen verjüngt. Idealerweise wirkt der Rejuvenator auch nachhaltig, d. h., die verjüngende Wirkung bleibt über lange Zeit erhalten, so dass eine weitere Alterung gehemmt wird. Gleichzeitig liegt der Erfindung die Aufgabe zu Grunde, einen Stoff zum Verwenden als Rejuvenator anzugeben.

Besonders vorteilhaft ist es, wenn ein derartiger Rejuvenator zusätzlich auch bei frischem Bitumen oder bei frisches Bitumen enthaltenden Massen die vorher genannte Hemmung der Alterung bewirkt.

Diese Aufgabe wird durch die Merkmale der selbstständigen Ansprüche gelöst. Gemäß der Erfindung werden als Rejuvenator ein Fettalkohol oder ein Gemisch aus einem Fettalkohol und einer Fettsäure verwendet, jeweils enthaltend mindestens 6 C-Atome und höchstens 24 C-Atome, bevorzugt mindestens 10 C-Atome und höchstens
22 C-Atome, besonders bevorzugt mindestens 14 C-Atome und höchstens
20 C-Atome. Idealerweise verwendet man einen Rejuvenator der genannten Art mit mindestens 16 C-Atomen und höchstens 18 C-Atomen. Der Anteil des Rejuvenators, bezogen auf die Menge des in der Masse enthaltenen Bitumens bzw. bitumenhaltigen Bindemittels kann zwischen 0,5 und 10 Gew.-% liegen.

Besonders geeignet sind aliphatische, d. h., nicht-aromatische Verbindungen als Rejuvenatoren.

Die Erfindung betrifft gleichzeitig die Verwendung eines Fettalkohols oder eines Gemisches aus einem Fettalkohol und einer Fettsäure als Rejuvenator zum Verjüngen einer gealterten bitumenhaltigen Masse oder zum Verzögern des Alterungsprozesses einer bitumenhaltigen Masse, wobei die Anzahl der C-Atome zwischen 6 und 24 liegt, und wobei die Menge des Rejuvenators, bezogen auf Bitumen beziehungsweise auf ein bitumenhaltiges Bindemittel, zwischen 0,5 und 10 % beträgt.

Innerhalb dieser Gruppe sind einwertige Verbindungen, d. h., Verbindungen mit einer COOH- bzw. OH-Gruppe besonders geeignet.

Innerhalb dieser Gruppe sind besonders unverzweigte Verbindungen geeignet.

Innerhalb dieser Gruppe sind besonders gesättigte Verbindungen geeignet.

In umfangreichen Versuchen wurden bei Stearinsäure, nachfolgend mit STAC abgekürzt, als Fettsäure überraschenderweise die besten Ergebnisse erhalten. Aber auch Fettsäuren wie z. B. Caprylsäure, eine flüssige Fettsäure, oder Behensäure, eine feste Fettsäure, zeigen eine Wirkung, allerdings in geringerem Umfang. Bei den aktuell marktüblich gehandelten und hier untersuchten Stearinsäuren handelt es sich überwiegend um Mischungen aus einem größeren Anteil an Stearinsäure und einem kleineren Anteil an Palmitinsäure. Daher umfasst die Erfindung auch derartige Mischungen bzw. handelsübliche Beimengungen von Nebenprodukten aus dem Herstellungsprozess der entsprechenden Stoffe.

Als ideal haben sich Fettalkohole erwiesen, insbesondere Stearylalkohol, nachfolgend mit STAL abgekürzt.

Wichtige Parameter zum Erfassen der Wirkung des erfindungsgemäßen Rejuvenators sind der Erweichungspunkt sowie die Nadelpenetration - weiter unten erwähnt. Von diesen beiden Parametern ist der Erweichungspunkt der wichtigere. Gerade dieser wird von dem erfindungsgemäßen Rejuvenator besonders günstig beeinflusst.

Ein besonders überraschender und bedeutender Vorteil des erfindungsgemäßen Additivs ist vor allem seine hohe Effektivität in der Funktion als Rejuvenator. Die durchgeführten Untersuchungen zeigen, dass selbst bei einem geringen Anteil des erfindungsgemäßen Rejuvenators von beispielsweise 3 %, bezogen auf das Bindemittel, die Langzeitalterung rückgängig gemacht wird, d. h., die Alterung der das Bindemittel im Straßenbelag während seiner Nutzungsdauer von bis zu ca. 20 Jahren und mehr unterliegt. Damit ist der Rejuvenator in dieser geringen Einsatzmenge für die Anwendung in der Praxis geeignet.

Im Vergleich zu aktuell marktüblichen flüssigen Rejuvenatoren sind die geeignetsten erfindungsgemäßen Rejuvenatoren Feststoffe, die sehr effektiv ein gealtertes Bitumen erweichen und verjüngen. Marktübliche Rejuvenatoren gemäß der Erfindung werden mit Mengen von ca. 3 - 15 %, insbesondere 8 - 10 % bezogen auf Bitumen dosiert. Bei z. B. Stearinsäure (STAC) und Stearylalkohol (STAL) liegt die notwendige Einsatzmenge jeweils deutlich niedriger, bei nur ca. 0,5 - 10 %, bevorzugt 1 - 9 %, besonders bevorzugt 2 - 8 %, am besten 3 - 6 %.

Es ist auch eine weitgehende Linearität der Verjüngung mit der gewählten Dosiermenge erkennbar. Somit lassen sich die notwendigen Dosiermengen des benötigten Additivs errechnen. Der Verjüngungseffekt ist nachweislich rheologisch und dauerhaft wirksam. Auch das Kälteverhalten eines mit Rejuvenator versetzten Bitumens verbessert sich signifikant, die Gefahr von Rissen und Brüchigkeit bei Kälte wird deutlich herabgesetzt. Der erfindungsgemäße Rejuvenator hat im Gegensatz zu einigen weiteren bekannten Rejuvenatoren keine negativen Auswirkungen auf das Adhäsionsverhalten von Bitumen zum Gestein. Ein Verlust der Klebkraft tritt nachweislich nicht ein.

Der Rejuvenator kann beim Recycling von Bitumen oder Bitumen enthaltenden Massen wie z. B. Straßenbelägen aus Asphalt in jeglicher Form zugesetzt werden. Als besonders günstig hat sich erwiesen, das erfindungsgemäße Additiv in granulierter Form, vorzugsweise als Pellet, einzusetzen. Hierbei kann es vorteilhaft sein, dem Pellet weitere Stoffe wie Cellulosefasern sowie andere organische oder anorganische Substanzen hinzuzufügen, wie sie typischerweise als Rezepturbestandteile von Bitumenmassen eingesetzt werden. Es hat sich gezeigt, dass Cellulosefasern höchst wirksam für den Aufbau des einzelnen Pellets sind. Der Einsatz von Cellulosefasern dient auch als "stabilisierender Zusatz" und ist bei bestimmten Straßenbelägen in verschiedenen Ländern obligatorisch. "Stabilisierende Zusätze" sorgen für die notwendige Stabilisierung bituminöser Massen, d. h., eine Entmischung des Mischguts durch das sogenannte Ablaufen des Bindemittels wird verhindert. Sind die Fasern bereits im Pellet mit dem Additiv und anderen Komponenten vereinigt, so bedarf es nicht getrennter Zugabevorgänge zum Straßenbau-Mischgut, vielmehr kann alles in einem einzigen Vorgang und voll automatisiert zugegeben werden. Nach dem Zugeben der Pellets zum Straßenbau-Mischgut - umfassend Mineralstoffe und Bindemittel - tritt im Mischer bei Vorliegen von Scherkräften und erhöhter Temperatur ein Prozess des "Auflösens" auf. Dies bedeutet, dass sich das aufgrund des niedrigen Schmelzpunktes schmelzbare Additiv im Pellet nach der Zugabe zum heißen Mischgut verflüssigt und sich gleichzeitig im Bindemittel homogen löst. Die Festigkeit des zurückbleibenden Pelletverbundes nimmt dadurch ab, die Pellets "zerfallen" unter dem Einfluss der vorhandenen Scherkräfte und alle weiteren auch nicht schmelzbaren Pellet-Komponenten werden in unmittelbarer Folge vereinzelt verteilt und können dadurch ihre Wirkung voll entfalten. Diese Verteilung ist eine gleichmäßige und führt zu einer entsprechend reproduzierbaren effektiven Modifizierung und Verjüngung. Durch das schnelle "Auflöseverhalten" und der guten und homogenen Verteilung der Pellets im Straßenbau-Mischgut kann auf eine zeitaufwändige und zusätzliche Mischzeit in der Regel verzichtet werden.

Die Erfindung lässt sich nicht nur anwenden zum (teilweise) Aufheben der Alterung von Bitumen oder Bitumen enthaltenden Massen wie z. B. eines Ausbauasphaltes, sondern kann auch einen positiven Einfluss auf das Alterungsverhalten eines verjüngten oder jungfräulichen Bitumens oder einer Mischung aus beiden ausüben, d. h., die Alterung wird verlangsamt. Vereinfachend ausgedrückt kann man sagen, dass die Erfindung in Abhängigkeit der Bitumenqualität mindestens eine der folgenden Aufgaben löst, wobei die notwendige Einsatzmenge des Rejuvenators bei 0,5 - 10 %, bevorzugt 1 - 9 %, besonders bevorzugt 2 - 8 %, am besten 3 - 6 % bezogen auf Bitumen liegt:
- Beim Aufarbeiten von gealterten Bitumen oder gealtertes Bitumen enthaltenden Massen: "aus alt mach neu"
- Nach dem Aufarbeiten von gealterten Bitumen oder gealtertes Bitumen enthaltenden Massen: "Anti-Aging-Effekt, d. h., verjüngtes Bitumen altert weniger stark"
- Beim Zugeben von erfindungsgemäßem Rejuvenator zum jungfräulichen Bitumen oder jungfräuliches Bitumen enthaltenden Massen: "Anti-Aging-Effekt, d. h., frisches Bitumen altert weniger stark".

Um die Wirkung von Rejuvenatoren auf die Alterung des Bindemittels zu ermitteln, werden Bitumen im Labor künstlich gealtert und die chemisch-physikalischen Eigenschaften des Bindemittels vor und nach Alterung geprüft. Diese Verfahren zur Simulation der Alterung von Bitumen sind EU-genormt.

Zur Alterung von Bitumen stehen zwei Verfahren zur Verfügung. Die Kurzzeitalterung (RTFOT-Verfahren) ist die Alterung der das Bindemittel während des Herstellungs- und Verarbeitungsprozesses des Asphaltes unterliegt. Die Langzeitalterung (PAV-Verfahren) ist die Alterung der das Bindemittel während seiner Nutzungsdauer unterliegt.

Die nachstehenden Untersuchungen beziehen sich auf erfindungsgemäße Additive.

Verfahren zum Altern von Bindemittel:
Kurzzeitalterung RTFOT-Verfahren (Rolling-Thin-Film-Oven-Test):
Das RTFOT-Alterungsverfahren wird nach DIN EN 12607-1 durchgeführt.

Eine Bindemittelprobe wird in Glasgefäßen in einer Wärmekammer für eine bestimmte Zeit auf eine festgelegte Temperatur erwärmt. Durch rotieren der Gefäße entsteht ein dünner Bindemittelfilm der mit konstanter Luftzufuhr beaufschlagt wird. Durchführung des Verfahrens bei 163 °C für 75 Minuten.

Langzeitalterung PAV-Verfahren (Pressure Ageing Vessel):
Das PAV-Alterungsverfahren wird nach DIN EN 14769 durchgeführt.
Die Bindemittelprobe wird als unbewegter Film in der Prüfapparatur für eine bestimmte Zeit bei festgelegter Temperatur mit einem definierten Druck beaufschlagt. Durchführung des Verfahrens bei 100 °C für 20 Stunden bei 21 bar.

Um die chemisch-physikalischen Eigenschaften des Bindemittels zu bestimmen werden folgend beschriebene Prüfmethoden verwendet.

Methode "Ring und Kugel" zum Erfassen des Erweichungspunktes:
Dieses konventionelle Prüfverfahren wird nach DIN EN 1427 durchgeführt. Bestimmt wird die Temperatur, bei der Bitumen (eingefüllt in einen Messingring) unter definierten Prüfbedingungen bei gleichmäßiger Erwärmung eine bestimmte Verformung durch das Gewicht einer aufgelegten Stahlkugel erfährt. Der Übergang vom festen in den flüssigen Zustand ist in der Regel gleitend. Das Erfassen und Klassifizieren des Bindemittels mit der "Ring und Kugel" erfolgt im hohen Gebrauchstemperaturbereich. Je härter/viskoser das Bitumen ist, desto höher liegt sein Erweichungspunkt. Diese Prüfung gibt einen Hinweis auf das Verhalten des Bitumens bei hohen Temperaturen und erlaubt eine Zuordnung des Bindemittels in die entsprechende Spezifikation.

### Methode "Nadelpenetration":

Die Nadelpenetration nach DIN EN 1426 wird definiert als Eindringtiefe einer Nadel mit 100 g Belastung innerhalb von 5 Sekunden ins Bitumen. Die Prüftemperatur ist bei üblichen Straßenbaubitumen auf 25 °C festgelegt. Die Angabe des Messergebnisses erfolgt in 1/10 mm. Die Methode der "Nadelpenetration" wird zur Ermittlung der "Härte" bzw. Steifigkeit eines Bindemittels herangezogen. In der Sortenbezeichnung eines Bitumens sind die Spannweiten der Nadelpenetration enthalten. Je kleiner der Wert der Nadelpenetration, umso härter ist das Bindemittel.

### Methode "Dynamisches Scherrheometer":

Nach DIN EN 14770 können mit dem Dynamischen Scherrheometer (DSR) mit den verschiedenen wählbaren Prüfungsarten und entsprechender Probengeometrie eine Reihe unterschiedlicher Materialeigenschaften bestimmt werden. Wichtige rheologische Kennwerte in der Bitumenprüfung sind z. B. der komplexe Schub- /oder Schermodul G* als Maß für die Bindemittelsteifigkeit mit dem dazugehörigen Winkel der Phasenverschiebung p, der die Bestimmung einer viskosen Komponente und einer elastischen Komponente von G* erlaubt.

### Methode "Biegebalken-Rheometer":

Mit dem Biegebalken-Rheometer (BBR) wird nach DIN EN 14771 das Verhalten von Bitumen im Tief-Temperaturverhalten untersucht. Ein kleiner Balken aus Bitumen wird in einem Temperierbad auf zwei Auflager aufgelegt und über eine mittig aufgebrachte konstante Kraft belastet. Die bei der Belastung aufgenommenen Werte geben Auskunft über die Steifigkeit der Probe und die Kriechgeschwindigkeit innerhalb der Belastungszeit. Die ermittelten Werte dienen zur Bestimmung der Temperatur bei der Bitumen einen spröden Zustand annimmt und somit zu Kälterissen neigt.

### Methode "Rolling-Bottle-Test":

Der Rolling-Bottle-Test ist ein Verfahren zur Bestimmung des Adhäsionsverhaltens zwischen Bitumen oder einem bitumenhaltigen Bindemittel und Gestein und wird nach DIN EN 12697-11 durchgeführt.

Gesteinskörnungen der Kornklassen 8/11 oder 5/8 werden vollständig mit Bindemittel umhüllt und in Glasflaschen in vorgegebenen Zeitintervallen rotierend mechanisch beansprucht. Nach Abschluss jeden Zeitintervalls wird der restliche Umhüllungsgrad optisch geschätzt. Der zurückbleibende Umhüllungsgrad wird in Prozent angegeben.

Die mit Rejuvenator bzw. Additiv durchgeführten Versuche und erhaltenen Ergebnisse sind nachfolgend aufgeführt:
Zunächst wurde ein Standard-Straßenbaubitumen 50/70 nach TL Bitumen 07/13 als Basisbindemittel ausgewählt.

Der Versuch umfasste drei Schritte:
Schritt 1:
   Herstellung einer für alle Versuche ausreichenden Menge an gealtertem Bitumen (RTFOT und PAV)
      Untersuchung der Wirkungsweise des Rejuvenators mittels Nadelpenetration und Erweichungspunkt Ring und Kugel am Basisbitumen und nach Zugabe des Rejuvenators für jeweils beide Alterungsstufen.
Schritt 2:
   Untersuchung der Wirkungsweise des Rejuvenators mittels Dynamischem Scherrheometer (DSR) und Biegebalkenrheometer (BBR) am Basisbitumen und nach Zugabe des Rejuvenators für jeweils beide Alterungsstufen.
Schritt 3:
   Untersuchung der Wirkungsweise eines Rejuvenators mittels Rolling-Bottle-Test am Basisbitumen und nach Zugabe des Rejuvenators für jeweils die zweite Alterungsstufe.

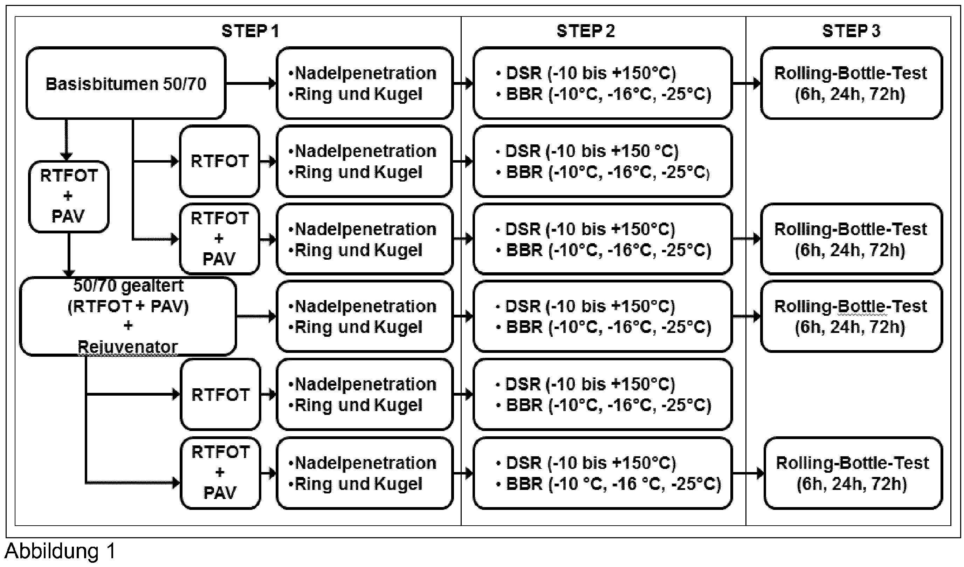

Das Untersuchungsprogramm ist in Abbildung 1 in Form eines Flussdiagramms dargestellt.

Ergebnisse der Untersuchungen mit Stearinsäure STAC

### Nadelpenetration

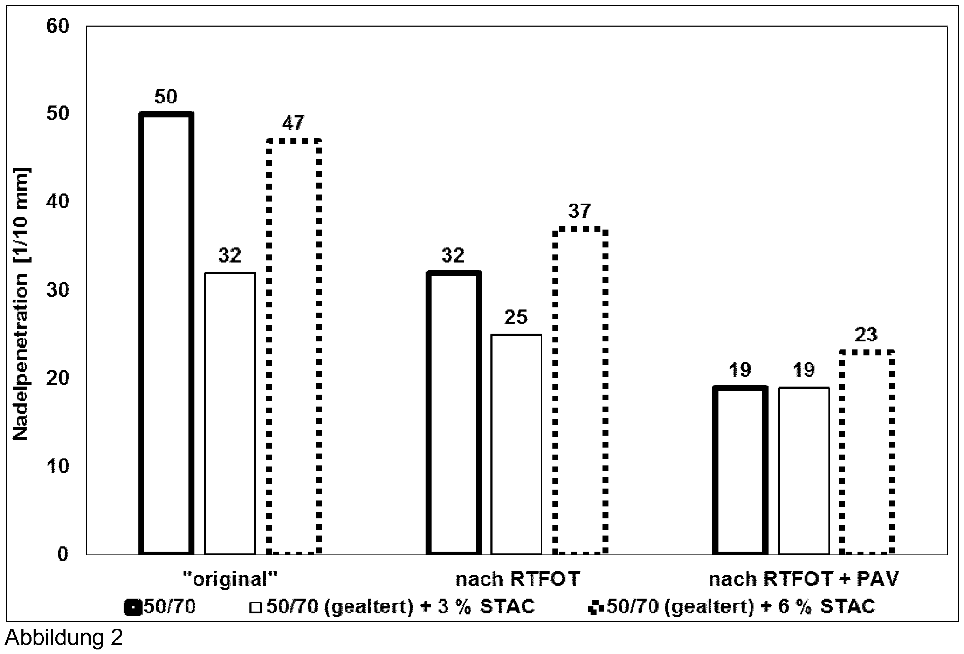

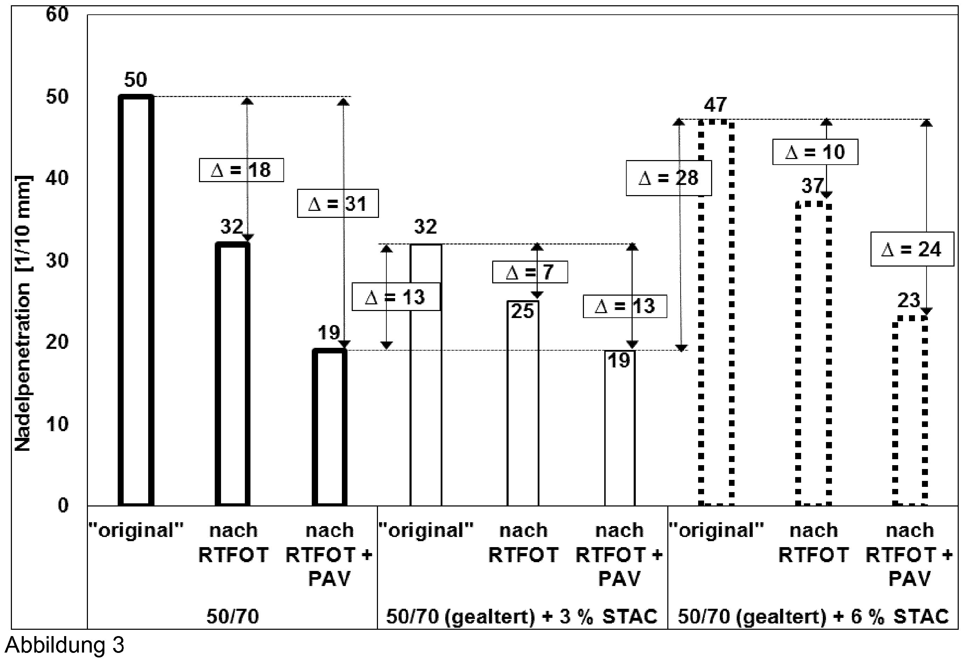

Die Untersuchungsergebnisse der Nadelpenetration sind in Abbildung 2 und Abbildung 3 zusammengefasst.

Zunächst zeigen die Ergebnisse der Nadelpenetration, dass das Basisbitumen 50/70 nach RTFOT und PAV deutliche Verhärtungserscheinungen aufweist, die Nadelpenetration sinkt also. Weist das Bindemittel im frischen Zustand noch 50 1/10 mm auf, sind es nach RTFOT noch 32 1/10 mm und nach RTFOT und PAV nur noch 19 1/10 mm. Was einem Delta nach RTFOT und PAV von 31 1/10 mm im Vergleich zum Ausgangsbindemittel entspricht.

Die Zugabe des Rejuvenators bewirkt eine Verjüngung des Bindemittels nach der Alterung. Die Härte des Bitumens nimmt ab, womit die Nadelpenetration ansteigt. Durch die Zugabe von 3 % STAC steigt die Nadelpenetration von 19 1/10 mm um 13 1/10 mm auf 32 1/10 mm. Dieses entspricht dem Wert des mittels RTFOT gealterten Basisbitumens 50/70. Durch die Zugabe von 6 % STAC steigt die Nadelpenetration von 19 1/10 mm auf 47 1/10 mm. Es wird also das Niveau des Ausgangsbindemittels durch die Zugabe erreicht.

Die wiederholte Alterung mittels RTFOT und PAV bewirkt bei dem mit 3 % STAC verjüngten Bindemittel wiederum eine Verhärtung des Bindemittels von 32 1/10 mm um 7 1/10 mm auf 25 1/10 mm nach RTFOT und auf 19 1/10 mm nach RTFOT und PAV. Was einem Delta nach RTFOT und PAV in Bezug auf das verjüngte Bindemittel von 13 1/10 mm entspricht.

Die wiederholte Alterung (RTFOT und PAV) des mit 6 % STAC verjüngten Bindemittels bewirkt eine Verhärtung von 47 1/10 mm um 10 1/10 mm auf 37 1/10 mm nach RTFOT und auf 23 1/10 mm nach RTFOT und PAV. Dies entspricht einem Delta nach RTFOT und PAV von 24 1/10 mm.

Zusammenfassend steigt der Messwert der Nadelpenetration nach der Zugabe des Rejuvenators (3 % und 6 % STAC) an. Das Bindemittel wird also weicher. Die Ergebnisse der Nadelpenetration nach den Alterungsstufen zeigen, dass das Bindemittel, welches mit STAC versetzt wurde, weniger stark altert als das Frischbindemittel (vgl. Abbildung 3). Bleiben von der Nadelpenetration nach der Langzeitalterung (RTFOT und PAV) beim Ausgangsbitumen nur 38 %, sind es bei einer Zugabe von 3 % STAC 59 % und bei einer Zugabe von 6 % STAC 49 %.

### Erweichungspunkt Ring und Kugel

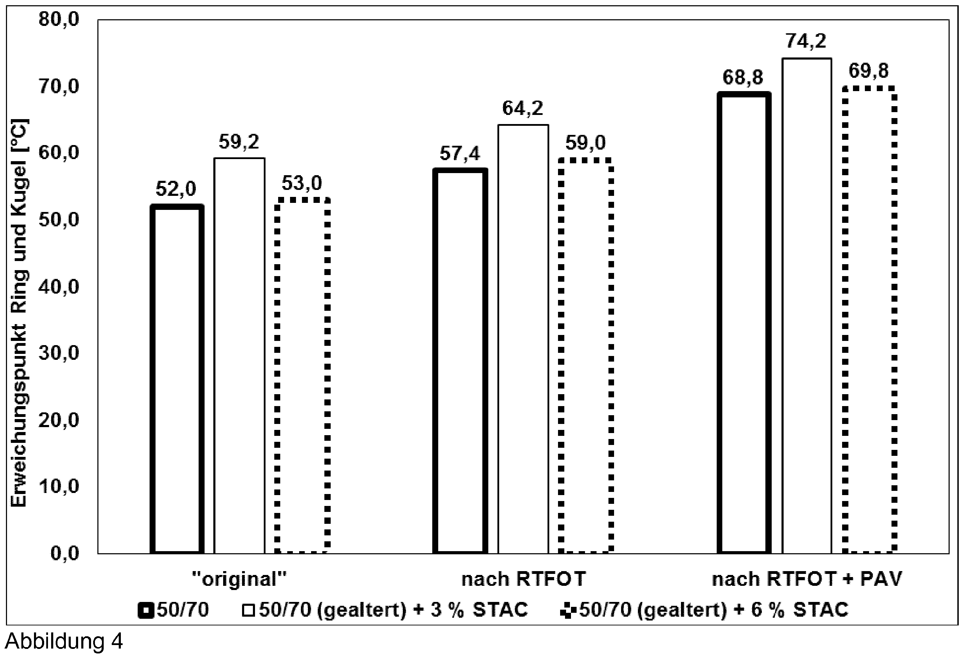

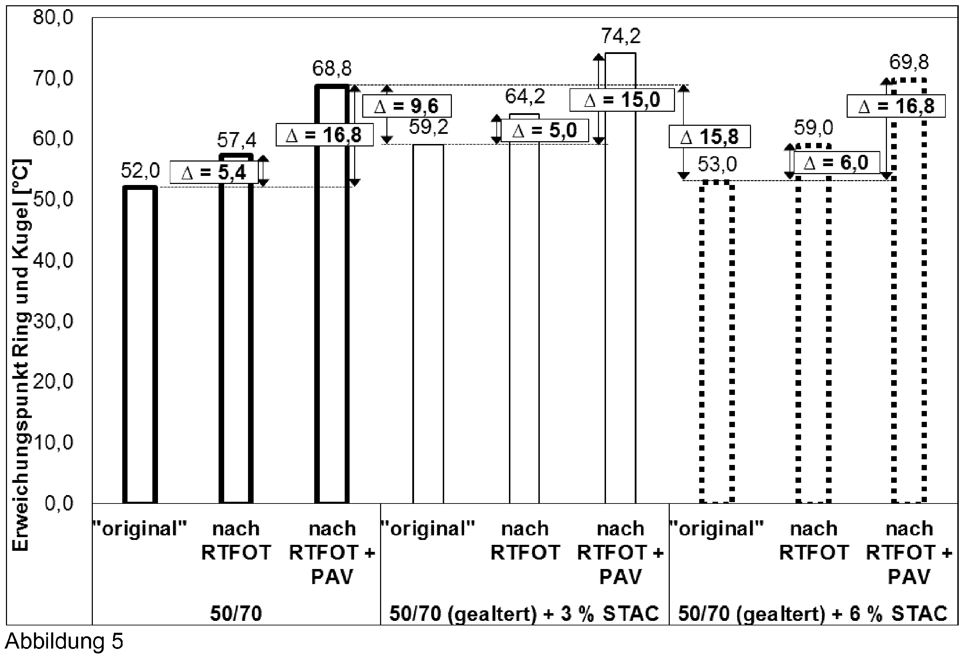

Die Untersuchungsergebnisse des Erweichungspunktes Ring und Kugel sind in Abbildung 4 und Abbildung 5 zusammengefasst.

Analog zu den Messwerten der Nadelpenetration zeigen die Messwerte des Erweichungspunktes, dass das Basisbitumen 50/70 bei der Alterung mittels RTFOT und PAV verhärtet. Der Erweichungspunkt steigt von 52 °C auf 57,4 °C nach RTFOT und 68,8 °C nach RTFOT und PAV an. Was einem Delta von 16,8 °C entspricht.

Die Zugabe des Rejuvenators bewirkt eine Verjüngung des gealterten Bindemittels, was sich durch eine Reduzierung des Erweichungspunktes darstellt. Bei einer Zugabe von 3 % STAC fällt der Wert von 68,8 °C auf 59,2 °C (Delta = 9,6 °C), was im Bereich des Erweichungspunktes des mittels RTFOT gealterten Basisbitumens 50/70 liegt. Durch eine Zugabe von 6 % STAC fällt der Wert des Erweichungspunktes von 68,8 °C auf 53,0 °C, also auf das Niveau des ungealterten Ausgangsbitumens 50/70.

Die wiederholte Alterung mittels RTFOT und PAV führt bei einer Zugabe von 3 % STAC wiederum zu einer Verhärtung des Bindemittels was einem Anstieg des Erweichungspunktes von 59,2 °C auf 64,2 °C (Delta = 5,0 °C) nach RTFOT und auf 74,2 °C nach RTFOT und PAV entspricht. Das Delta nach RTFOT und PAV in Bezug auf das verjüngte Bindemittel beträgt demnach 15,0 °C.

Die wiederholte Alterung (RTFOT und PAV) des mit 6 % STAC verjüngten Bindemittels hat einen Anstieg des Erweichungspunktes von 53,0 °C auf 59,0 °C (Delta = 6,0 °C) und einen Anstieg von 53,0 °C auf 69,8 °C zur Folge. Das Delta nach RTFOT und PAV entspricht hier also 16,8 °C in Bezug auf das verjüngte Bindemittel.

Zusammenfassend sinkt der Erweichungspunkt Ring und Kugel nach der Zugabe des Rejuvenators (3 % und 6 % STAC). Das Bindemittel wird also, analog zur Nadelpenetration, verjüngt. Die Untersuchungsergebnisse nach den Alterungsstufen zeigen außerdem, wie auch schon die Ergebnisse der Nadelpenetration, dass das verjüngte Bindemittel hinsichtlich des Erweichungspunktes weniger stark (3 % STAC) oder genauso stark (6 % STAC) altert wie das Ausgangsbitumen 50/70 (vgl. Abbildung 5). Prozentual bezogen auf den Zustand vor der Alterung mittels RTFOT und PAV bedeutet dies eine Zunahme des Erweichungspunktes um 32 % beim Ausgangsbitumen 50/70 und bei der verjüngten Variante mit 6 % STAC und eine Zunahme von 25 % bei einer Zugabe von 3 % STAC.

### Dynamisches Scherrheometer

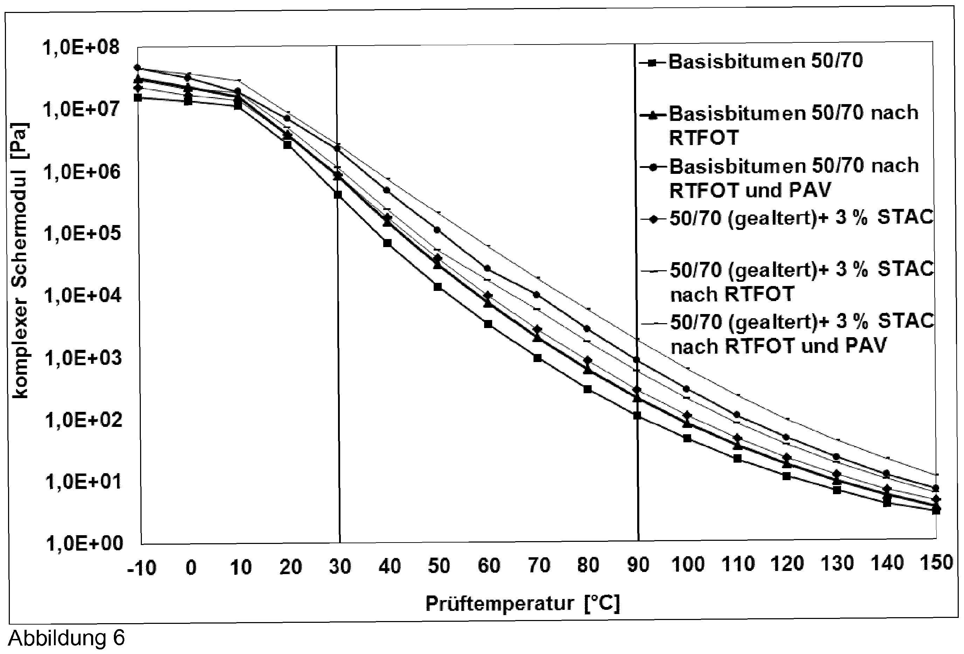

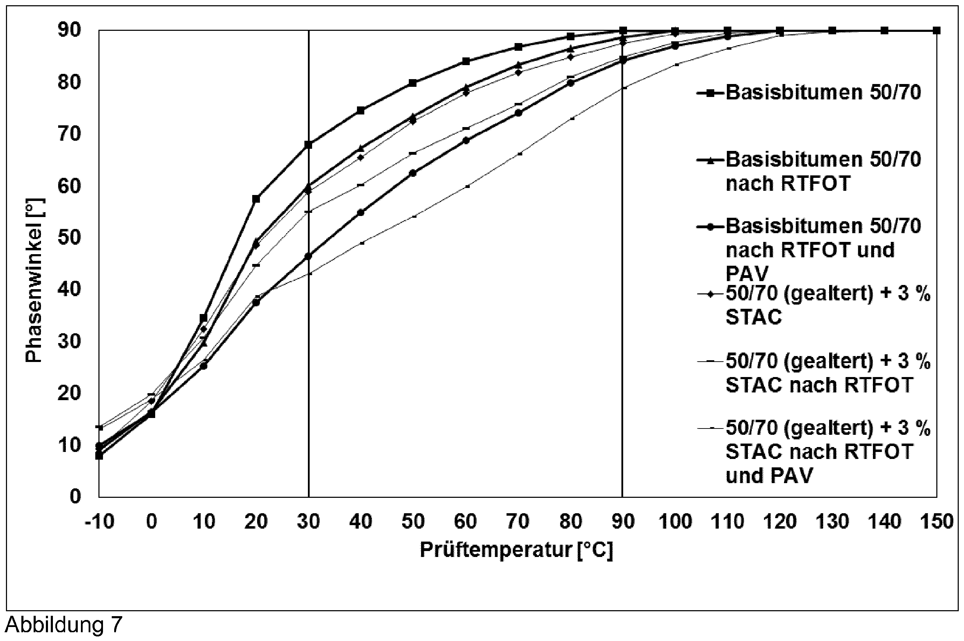

Die Ergebnisse des Dynamischen Scherrheometers sind in Abbildung 6 (komplexer Schermodul) als auch in Abbildung 7 (Phasenwinkel) dargestellt.
Die Untersuchungen im DSR zeigen, dass der komplexe Schermodul bei Alterung des Bitumens zunimmt. Das mit 3 % STAC versetzte gealterte Bitumen erreicht über die gesamte Temperaturspanne geringere Werte als das mittels RTFOT und PAV gealterte Basisbitumen. Hier ist also ein eindeutiger Verjüngungseffekt zu verzeichnen. Die Steifigkeit des Bindemittels nimmt durch die Zugabe von STAC ab und erreicht ähnliche Werte wie das nur mittels RTFOT gealterte Basisbitumen 50/70.

Die Tendenzen der Ergebnisse des komplexen Schermoduls zeigen sich über den gesamten Temperaturverlauf.

Des Weiteren zeigen die Untersuchungen, dass der Phasenwinkel des mittels 3 % STAC verjüngten Bindemittels im Vergleich zum langzeitgealterten Bindemittel ansteigt. Somit wird nicht nur die Steifigkeit, sondern auch die visko-elastischen Eigenschaften des mittels RTFOT gealterten Bindemittels erreicht.

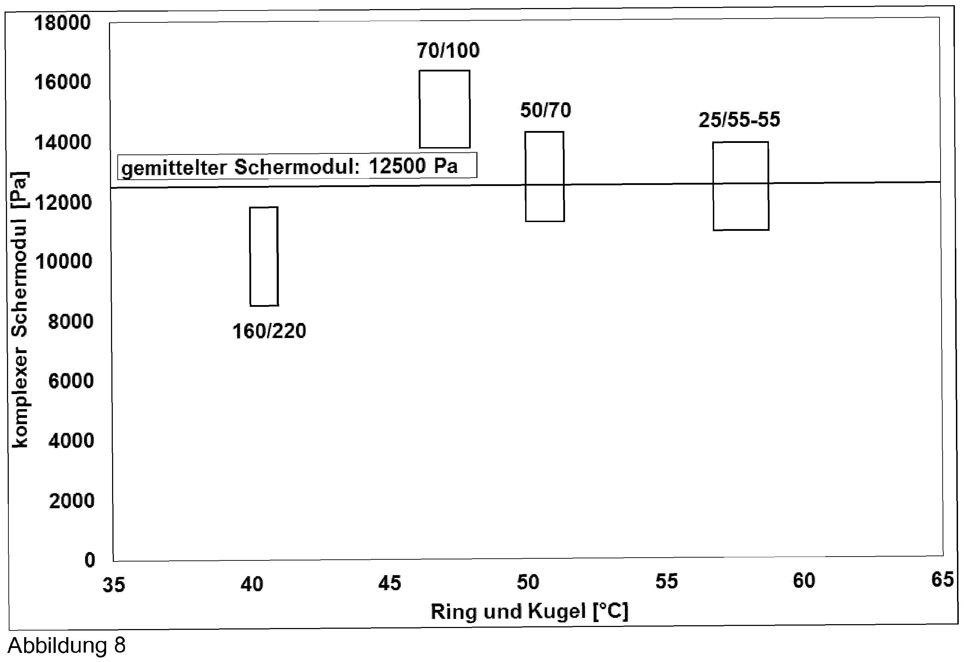

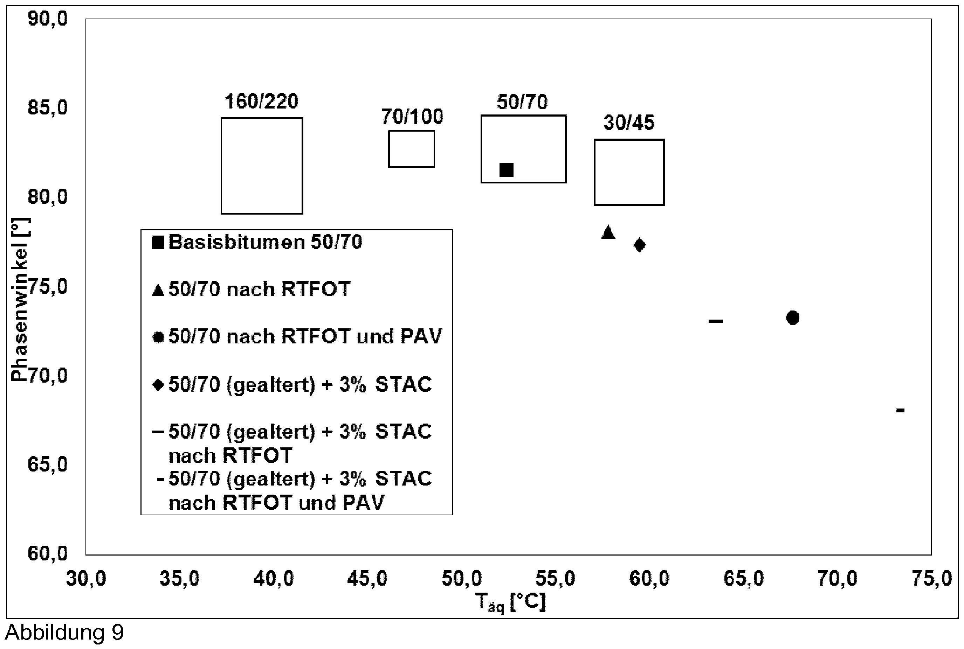

Abbildung 9 zeigt die Ergebnisse des DSR über die Äquivalenztemperatur bei 12.500 Pa. Diese Äquivalenztemperatur wird über den komplexen Schermodul bestimmt, der in Abhängigkeit vom entsprechenden Erweichungspunkt Ring und Kugel aufgetragen wird (Abbildung 8). Über einen Datenpool aller gebräuchlichen Bindemittelvarianten ergibt sich ein gemittelter Schermodul von 12.500 Pa. Bei diesem Schermodul wird die Äquivalenztemperatur abgelesen und diese mit dem zugehörigen Phasenwinkel aufgetragen. Durch dieses Verfahren ergibt sich die Darstellung aus Abbildung 9.

Diese Darstellung veranschaulicht den Verjüngungseffekt des Additivs durch eine Zunahme des Phasenwinkels von 3,4 ° und einer Abnahme der Äquivalenztemperatur von -8,2 °C.

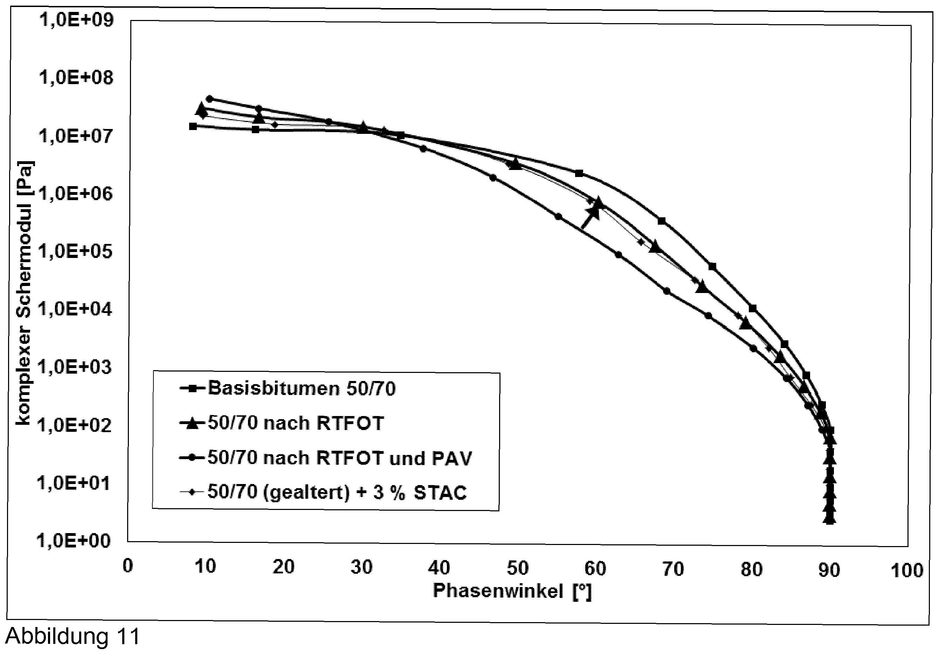

In Abbildung 11 ist das Black-Diagramm dargestellt. Dieses stellt den Phasenwinkel in Abhängigkeit des komplexen Schermoduls dar. Somit lässt sich eine Bewertung des rheologischen Zustands des Bindemittels unabhängig von der Temperatur durchführen.

Durch eine Alterung des Bindemittels verschiebt sich die Kurve im Black-Diagramm und der Grad der Alterung lässt sich durch die Verringerung des Phasenwinkels bei gleichbleibendem komplexen Schermodul erkennen.

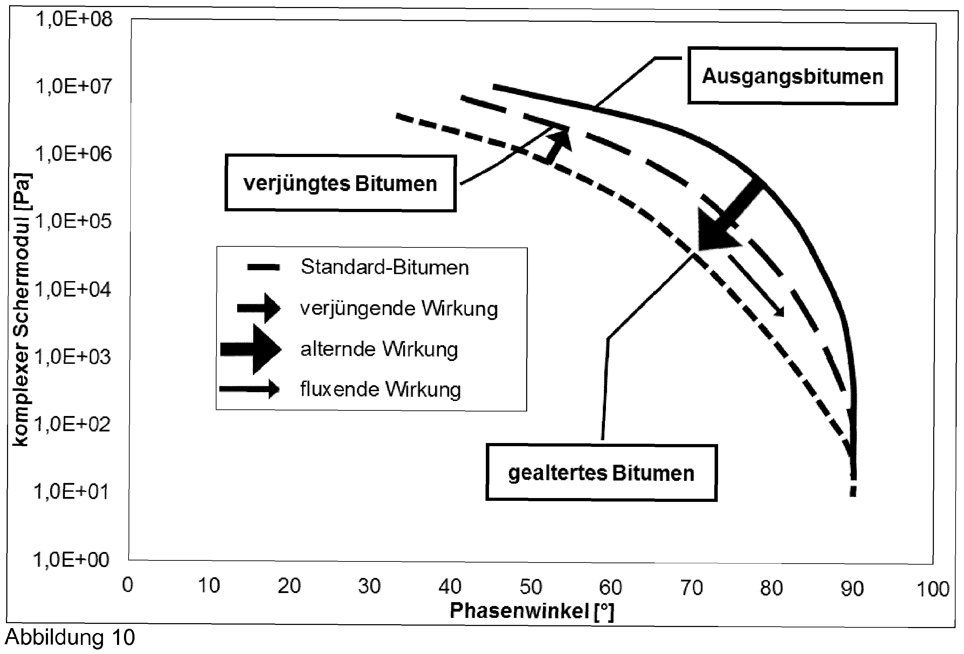

Eine verjüngende Wirkung eines Rejuvenators zeigt sich wiederum bei einer Vergrößerung des Phasenwinkels bei gleichbleibendem Schermodul. Eine Verschiebung der Kurve in Richtung des ursprünglichen Verlaufs des ungealterten Bindemittels zeigt also eine effektive, rheologisch wirksame Verjüngung des Bitumens. Eine hingegen nur rein fluxende Wirkung des Rejuvenators würde keine Verschiebung des Kurvenverlaufs in Richtung der ursprünglichen Lage bewirken (Abbildung 10).

Wie das Black-Diagramm in Abbildung 11 zeigt, führt eine Zugabe von 3 % STAC zu einer rheologisch wirksamen Verjüngung, die das Niveau des nach RTFOT gealterten Ausgangsbitumens erreicht.

### Biegebalkenrheometer

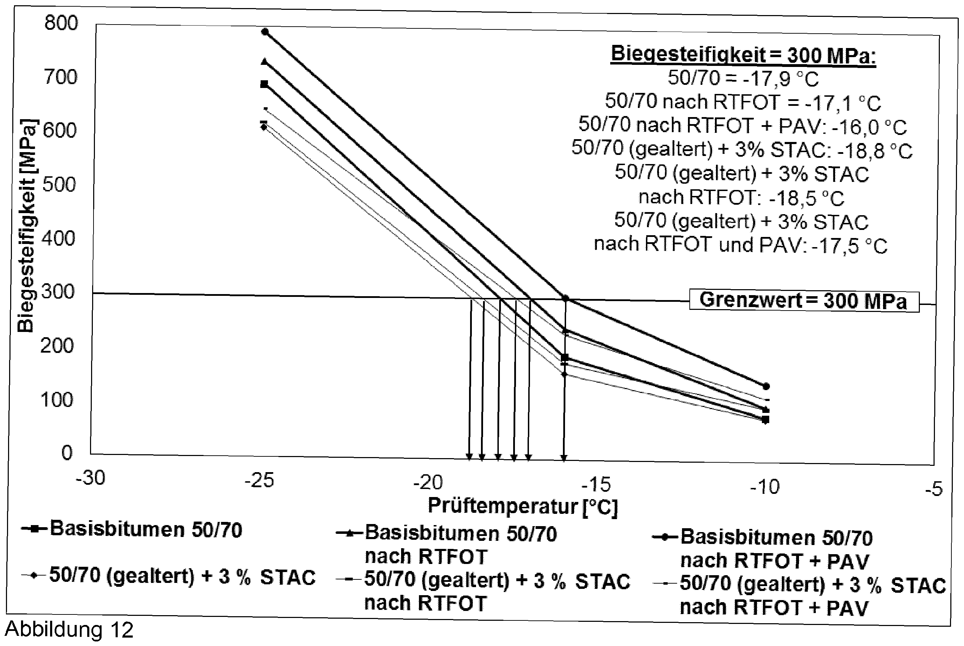

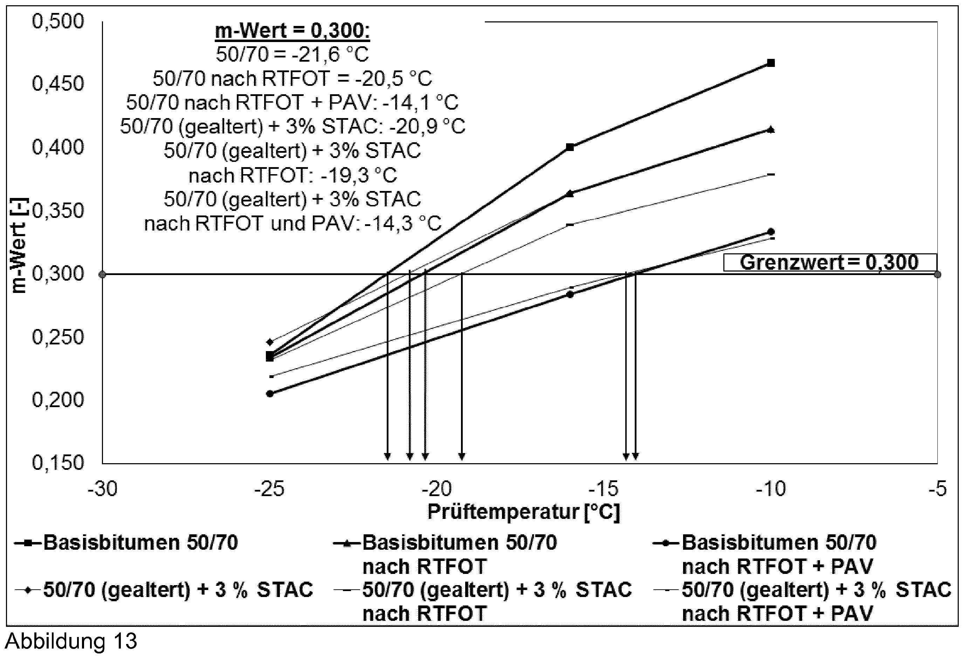

Die Untersuchungsergebnisse des Biegebalkenrheometers sind in Abbildung 12 und Abbildung 13 zusammengefasst.

Analog zu den bisherigen Untersuchungen lassen die Ergebnisse im Biegebalkenrheometer eine deutliche Verjüngung des gealterten Bindemittels durch die Zugabe von 3 % STAC erkennen.

Der Alterungseffekt zeigt sich dadurch, dass die Biegesteifigkeiten des Bindemittels durch die Alterung des Bindemittels ansteigen und wiederum durch die Zugabe von 3 % STAC verringert werden. Bei einer Prüftemperatur von -10 °C sinkt der Steifigkeitswert durch die Verjüngung wieder auf den Bereich des Ursprungswertes des Basisbitumens.

Je tiefer die Prüftemperatur ist, desto größer wird der Effekt, dass das verjüngte Bindemittel sogar geringere Steifigkeiten aufweist als das Basisbitumen. Bei -25 °C ist die Biegesteifigkeit des verjüngten und nochmals gealterten Bindemittels geringer als die des Ausgangsbitumens.

Das Abgreifen der Prüftemperatur bei dem Grenzwert von 300 MPa (Tabelle 1) zeigt auch eine deutliche Verbesserung durch die Zugabe von 3 % STAC. Hier liegt der Wert des verjüngten und nochmals gealterten Bindemittels im Bereich des Ausgangsbindemittels.

Der m-Wert (dargestellt in Abbildung 13) ist ein Kriterium für die Relaxationsfähigkeit des Bindemittels. Ein hoher Wert wird als gutes Tieftemperaturverhalten angesehen. Als Grenzwert wird in der Literatur oft ein Wert von 0,300 angegeben. Das Abgreifen der Prüftemperatur bei diesem Grenzwert weist auf ein gutes Relaxationsverhalten des mit 3 % STAC verjüngten Bindemittels hin (Tabelle 1)

Das mittels 3 % STAC verjüngte Bindemittel weist auch hier sehr ähnliche Werte auf wie das RTFOT-gealterte Ausgangsbitumen, zeigt allerdings bei einer Prüftemperatur von -25 °C den besten Wert.

Das verjüngte und nochmals gealterte Bindemittel liegt im Bereich des langzeitgealterten Basisbitumens und hat bei -25 °C das bessere Relaxationsverhalten.

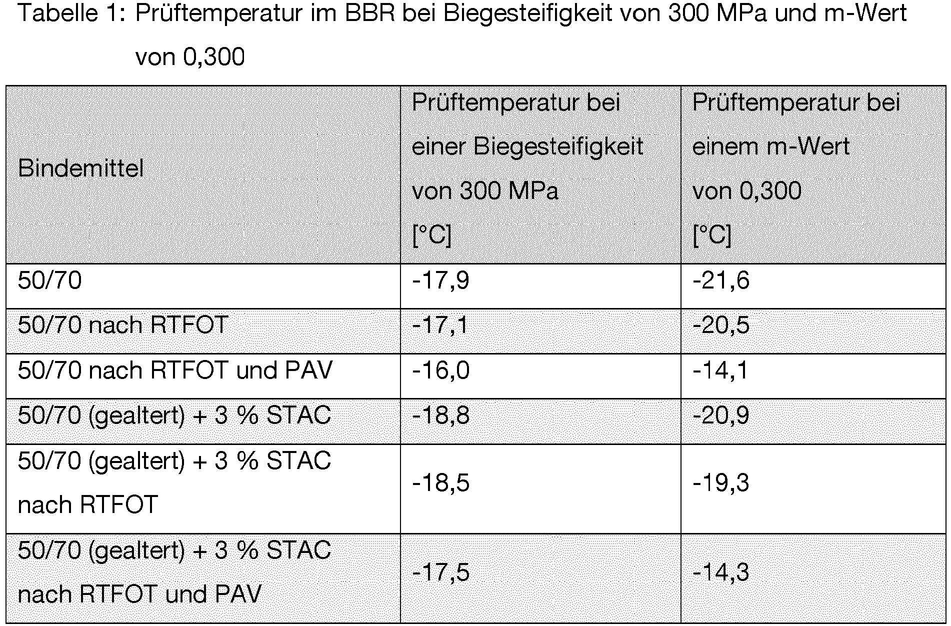

### Rolling-Bottle-Test

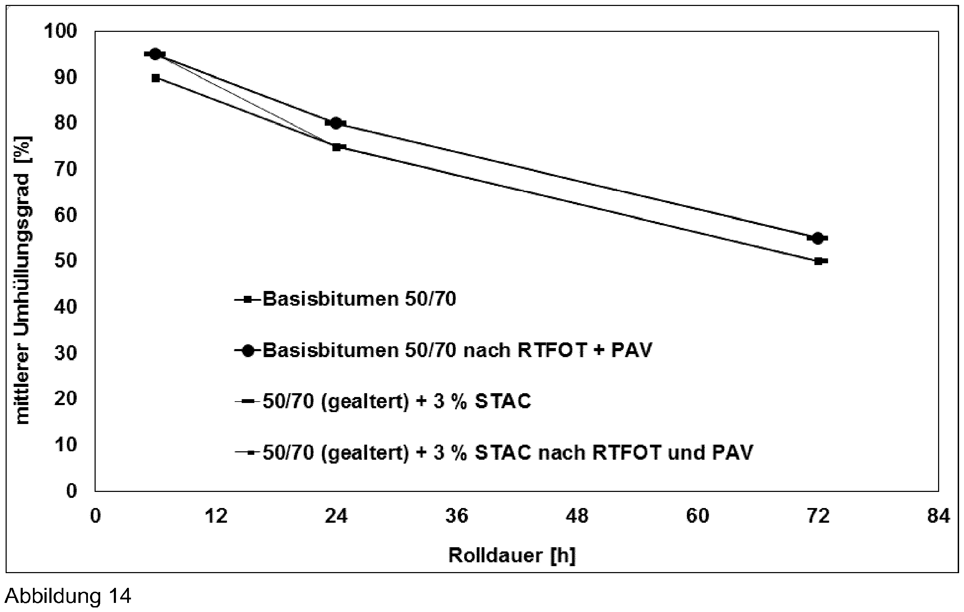

Die Untersuchungsergebnisse des Rolling-Bottle-Tests sind in Abbildung 14 dargestellt.

Die Adhäsionsversuche mittels Rolling-Bottle-Test haben gezeigt, dass das Bindemittel hinsichtlich der Affinität zum Gestein durch die Zugabe von 3 % STAC keine Veränderung der Kennwerte des Basisbitumens aufweist.

Die Affinität des Bindemittels zum Gestein ist also nach der Zugabe von STAC und weiterer Alterung durch RTFOT und PAV auf gleichbleibendem Niveau.

Zusammenfassend zeigen die Ergebnisse der durchgeführten Bindemitteluntersuchungen, dass die Zugabe des erfindungsgemäßen Additivs STAC zu einem signifikant verjüngenden Effekt, bei einem im Labormaßstab gealterten Straßenbaubitumen (hier 50/70), führt.

Die Untersuchungsergebnisse der Nadelpenetration und des Erweichungspunktes Ring und Kugel zeigen, dass die Zugabe von STAC eine deutliche Erhöhung der Nadelpenetration und eine Verringerung des Erweichungspunktes bewirkt.

Auch die Werte des komplexen Schermoduls und des Phasenwinkels im DSR weisen auf eine deutlich verjüngende Wirkung des Additivs STAC hin. Durch die Zugabe wird der komplexe Schermodul, also die Steifigkeit, herabgesetzt und der Phasenwinkel, also der viskose Anteil, steigt. Das Black-Diagramm zeigt außerdem, dass der Verjüngungseffekt als rheologisch wirksam, also nicht fluxend, eingestuft werden kann.

Die Untersuchungsergebnisse im BBR zeigen außerdem, dass das Tieftemperaturverhalten des Bindemittels durch die Zugabe des Additivs STAC verbessert wird. Die Biegesteifigkeiten werden durch den Rejuvenator deutlich herabgesetzt. Bei einer Prüftemperatur von -25 °C sind sie geringer als beim Ausgangsbitumen, selbst nach erneuter Langzeitalterung (RTFOT und PAV). Außerdem wird die Relaxationsfähigkeit durch die Zugabe des Additivs STAC erhöht.

Der Rolling-Bottle-Test hat gezeigt, dass das Adhäsionsverhalten des Bindemittels zum Gestein durch die Zugabe von 3 % STAC nicht negativ beeinflusst wird.

Das erfindungsgemäße Additiv STAC wirkt insbesondere als Rejuvenator, aber auch als Anti-Aging-Additiv. Das erfindungsgemäße Additiv STAC verbessert die Qualität eines gealterten Bitumens, insbesondere die entscheidenden chemisch-physikalischen Eigenschaften:
- Der Verjüngungseffekt ist nachweislich rheologisch wirksam d. h., nicht fluxend, sondern verjüngend (vgl. Black-Diagramm)
- Die Zugabe von nur 3 % STAC macht Langzeitalterung im PAV rückgängig
- Es ist eine Linearität der Verjüngung erkennbar:

**Tabelle 2: Verringerung des Erweichungspunktes nach Methode "Ring und Kugel":**

| Zugabe von Rejuvenator bezogen auf die Bitumenmenge | Absenkung des Erweichungspunktes | Absenkung des Erweichungspunktes, umgerechnet auf eine Rejuvenator-Zugabe von 1% |
|---|---|---|
| 1,5 % STAC | Δ ≈ - 4,5 °C | 1 % ≈ - 3 °C |
| 3,0 % STAC | Δ ≈ - 9 °C | 1 % ≈ - 3 °C |
| 6,0 % STAC | Δ ≈ - 16 °C | 1 % ≈ - 2,7 °C |

**Tabelle 3: Erhöhung der Nadelpenetration:**

| Zugabe von Rejuvenator bezogen auf die Bitumenmenge | Erhöhung der Nadelpenetration | Erhöhung der Nadelpenetration, umgerechnet auf eine Rejuvenator-Zugabe von 1 % |
|---|---|---|
| 1,5 % STAC | Δ ≈ + 8 1/10 mm | 1 % ≈ + 5 1/10 mm |
| 3,0 % STAC | Δ ≈ + 15 1/10 mm | 1 % ≈ + 5 1/10 mm |
| 6,0 % STAC | Δ ≈ + 28 1/10 mm | 1 % ≈ + 5 1/10 mm |

- Die Zugabe von 3 % STAC verbessert die Tieftemperatureigenschaften des gealterten Bitumens in Bezug auf die Biegesteifigkeit und die Relaxationsfähigkeit (m-Wert).
- Die Zugabe von 3 % STAC hat nach dem Rolling-Bottle-Test keine negativen Auswirkungen auf das Adhäsionsverhalten von Bitumen zum Gestein.
- Die Zugabe von STAC verjüngt das Bitumen und verringert die Alterungsgeschwindigkeit. Die Untersuchungsergebnisse nach den Alterungsstufen zeigen zusammengefasst, dass das verjüngte Bindemittel hinsichtlich des Erweichungspunktes und der Nadelpenetration weniger stark altert als das frische Ausgangsbitumen 50/70.

Idealerweise verwendet man erfindungsgemäße Additive mit mindestens 16 C-Atomen und höchstens 18 C-Atomen. Verwendet man Additive der genannten Art mit einer längeren oder kürzeren Kohlenstoffkette kann sich die Effektivität des Verjüngungseffektes reduzieren:

**Tabelle 4: Verringerung des Erweichungspunktes nach Methode "Ring und Kugel":**

| Zahl der C-Atome des Rejuvenators | Zugabe von Rejuvenator bezogen auf die Bitumenmenge | Absenkung des Erweichungspunktes | Absenkung des Erweichungspunktes, umgerechnet auf eine Rejuvenator-Zugabe von 1 % |
|---|---|---|---|
| 8 | 3,0 % Caprylsäure | Δ ≈ - 1,5°C | 1 % ≈ - 0,5 °C |
| 18 | 3,0 % Stearinsäure | Δ ≈ - 9°C | 1 % ≈ - 3 °C |
| 22 | 3,0 % Behensäure | Δ ≈ - 4,5 °C | 1 % ≈ - 1,5°C |

**Tabelle 5: Erhöhung der Nadelpenetration:**

| Zahl der C-Atome des Rejuvenators | Zugabe von Rejuvenator bezogen auf die Bitumenmenge | Erhöhung der Nadelpenetration | Erhöhung der Nadelpenetration, umgerechnet auf eine Rejuvenator-Zugabe von 1 % |
|---|---|---|---|
| 8 | 3,0 % Caprylsäure | Δ ≈ + 3 1/1 0 mm | 1 % ≈ + 1 1/10mm |
| 18 | 3,0 % Stearinsäure | Δ ≈ + 15 1/10 mm | 1 % ≈ + 5 1/10 mm |
| 22 | 3,0 % Behensäure | Δ ≈ + 4,5 1/1 0 mm | 1 % ≈ + 1,5 1/10 mm |

Ergebnisse der Untersuchungen mit Stearylalkohol STAL

### Nadelpenetration

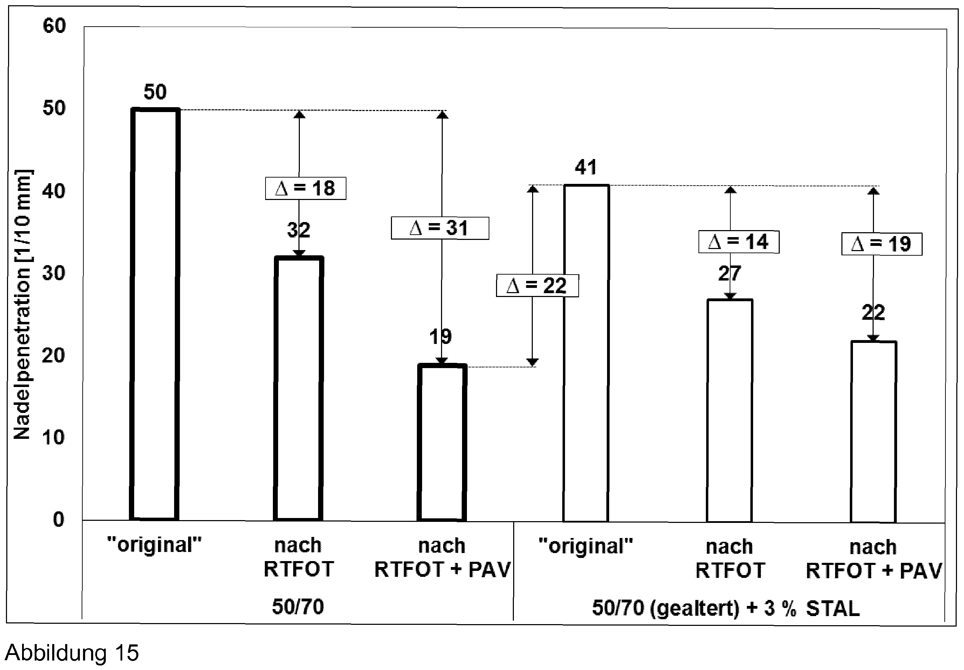

Die Untersuchungsergebnisse der Nadelpenetration sind in Abbildung 15 zusammengefasst.

Zunächst zeigen die Ergebnisse der Nadelpenetration, dass das Basisbitumen 50/70 nach RTFOT und PAV deutliche Verhärtungserscheinungen aufweist, die Nadelpenetration sinkt also. Weist das Bindemittel im frischen Zustand noch 50 1/10 mm auf, sind es nach RTFOT noch 32 1/10 mm und nach RTFOT und PAV nur noch 19 1/10 mm. Was einem Delta nach RTFOT und PAV von 31 1/10 mm im Vergleich zum Ausgangsbindemittel entspricht.
Die Zugabe des Rejuvenators STAL bewirkt eine Verjüngung des Bindemittels nach der Alterung. Die Härte des Bitumens nimmt ab, was sich durch einen Anstieg der Nadelpenetration zeigt. Durch die Zugabe von 3 % STAL steigt die Nadelpenetration von 19 1/10 mm um 22 1/10 mm auf 41 1/10 mm an. Die Alterungserscheinungen durch die RTFOT und PAV-Verfahren sind deutlich geringfügiger ausgeprägt als beim Ausgangsbindemittel.

Zusammenfassend steigt die Nadelpenetration nach der Zugabe des Additivs STAL an. Das Bindemittel wird also weicher. Die Ergebnisse der Nadelpenetration nach den Alterungsstufen zeigen, dass das Bindemittel, welches mit STAL versetzt wurde, weniger stark altert als das Frischbindemittel (vgl. Abbildung 15).

### Erweichungspunkt Ring und Kugel

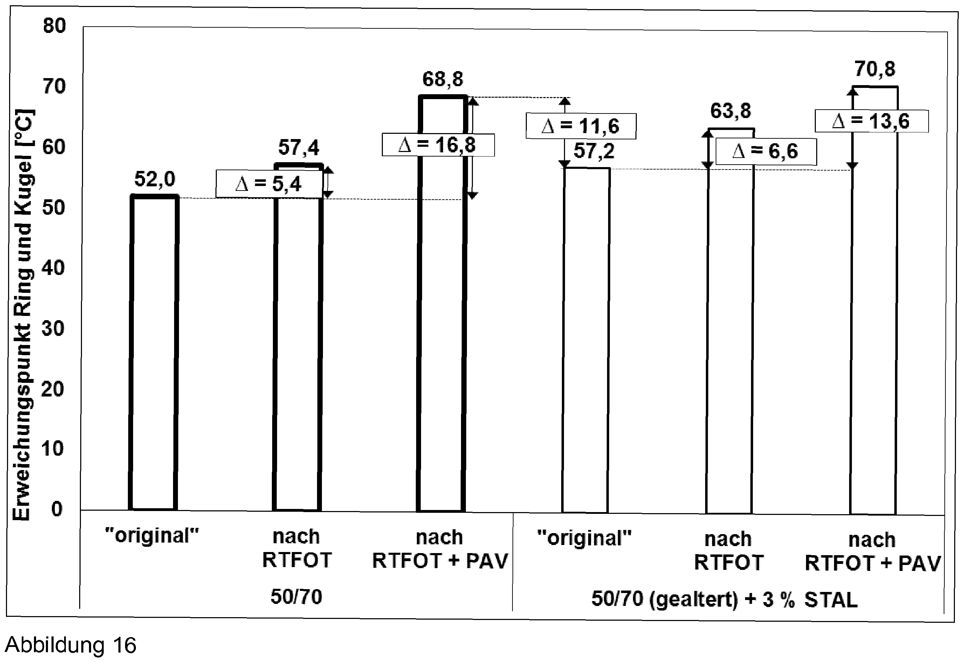

Die Untersuchungsergebnisse des Erweichungspunktes Ring und Kugel sind in Abbildung 16 zusammengefasst.

Analog zu den Ergebnissen der Nadelpenetration zeigen die Ergebnisse des Erweichungspunktes, dass das Basisbitumen 50/70 bei der Alterung mittels RTFOT und PAV verhärtet. Der Erweichungspunkt steigt von 52 °C auf 57,4 °C nach RTFOT und 68,8 °C nach RTFOT und PAV an, was einem Delta von 16,8 °C entspricht.

Die Zugabe des Additivs STAL bewirkt eine Verjüngung des gealterten Bindemittels, was sich durch eine Reduzierung des Erweichungspunktes darstellt. Bei einer Zugabe von 3 % STAL fällt der Wert von 68,8 °C auf 57,2 °C (Delta = 11,6 °C), der nahezu identisch ist mit dem Erweichungspunkt des mittels RTFOT gealterten Basisbitumens 50/70.

Die wiederholte Alterung mittels RTFOT und PAV führt bei einer Zugabe von 3 % STAL wiederum zu einer Verhärtung des Bindemittels was sich durch einen Anstieg des Erweichungspunktes von 57,2 °C auf 63,8 °C (Delta = 5,0 °C) nach RTFOT und auf 74,2 °C nach RTFOT und PAV widerspiegelt. Das Delta nach RTFOT und PAV in Bezug auf das verjüngte Bindemittel beträgt demnach 13,6 °C. Zusammenfassend sinkt der Erweichungspunkt Ring und Kugel nach der Zugabe des Additivs STAL. Das Bindemittel wird also, analog zur Nadelpenetration, verjüngt. Die Untersuchungsergebnisse nach den Alterungsstufen zeigen außerdem, wie auch schon die Ergebnisse der Nadelpenetration, dass das verjüngte Bindemittel hinsichtlich des Erweichungspunktes weniger stark (PAV-Langzeitalterung) altert als das Ausgangsbitumen 50/70 (vgl. Abbildung 16).

### Dynamisches Scherrheometer

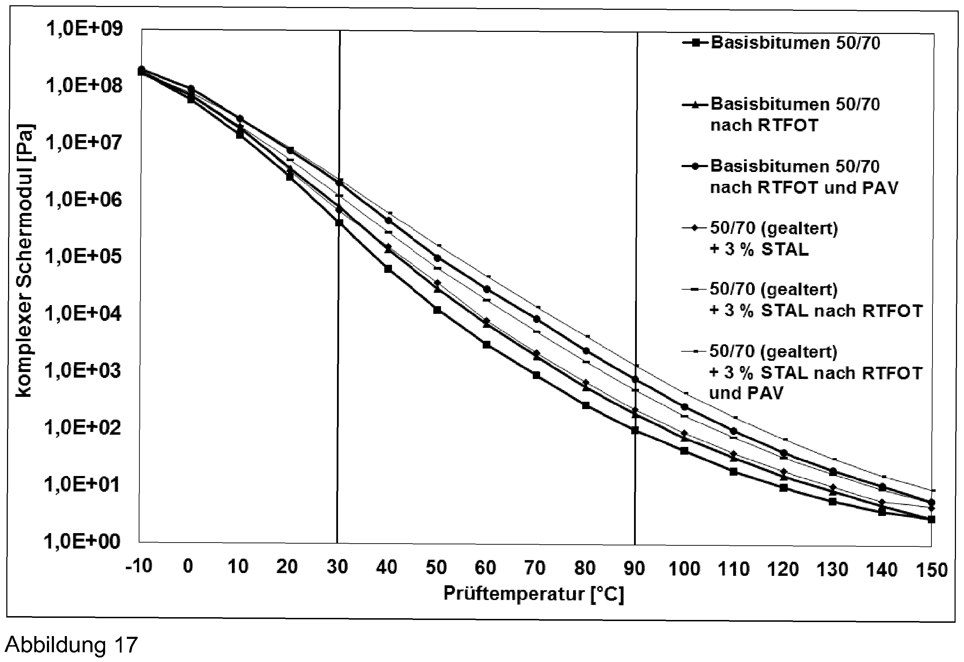

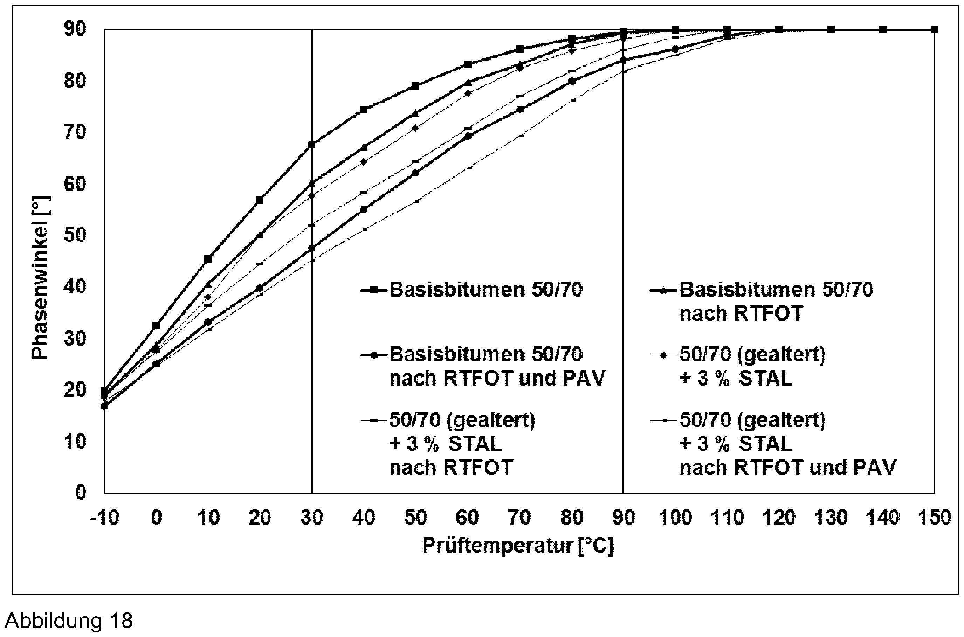

Die Ergebnisse des Dynamischen Scherrheometers sind in Abbildung 17 (komplexer Schermodul) als auch in Abbildung 18 (Phasenwinkel) dargestellt. Die Untersuchungen im DSR zeigen, dass der komplexe Schermodul bei Alterung des Bitumens zunimmt. Das mit 3 % STAL versetzte gealterte Bitumen befindet sich über die gesamte Temperaturspanne auf einem Niveau mit dem RTFOT gealterten Basisbitumen. Hier ist also ein eindeutiger Verjüngungseffekt zu verzeichnen. Die Steifigkeit des Bindemittels nimmt durch die Zugabe des Additivs ab und erreicht ähnliche Werte wie das mittels RTFOT gealterte Basisbitumen 50/70.

Die Tendenzen der Ergebnisse des komplexen Schermoduls zeigen sich über den gesamten Temperaturverlauf.

Des Weiteren zeigen die Untersuchungen, dass sich der Phasenwinkel des mittels 3 % STAL verjüngten Bindemittels, analog zum komplexen Schermodul, auf einem Niveau mit dem RTFOT gealterten Basisbitumen befindet. Der Verlauf des Phasenwinkels lässt außerdem erkennen, dass das Additiv einen positiven Einfluss auf die visko-elastischen Eigenschaften des Bindemittels hat.

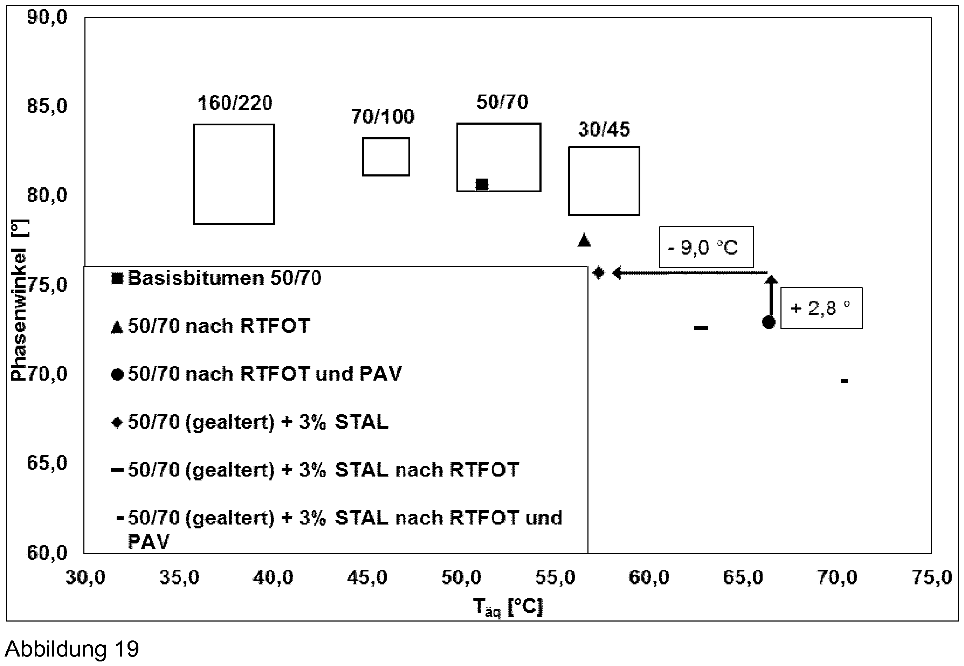

Abbildung 19 zeigt die Ergebnisse des DSR über die Äquivalenztemperatur bei 15.000 Pa. Diese Äquivalenztemperatur wird über den komplexen Schermodul bestimmt, der in Abhängigkeit vom entsprechenden Erweichungspunkt Ring und Kugel aufgetragen wird. Über den Datenpool aller gebräuchlichen Bindemittelvarianten ergibt sich ein gemittelter Schermodul von 15.000 Pa. Bei diesem Schermodul wird die Äquivalenztemperatur abgelesen und diese mit dem zugehörigen Phasenwinkel aufgetragen. Durch dieses Verfahren ergibt sich die Darstellung aus Abbildung 19.
Diese Darstellung veranschaulicht den Verjüngungseffekt des Additivs STAL durch eine Zunahme des Phasenwinkels von 2,8 ° und einer Abnahme der Äquivalenztemperatur von -9,0 °C.

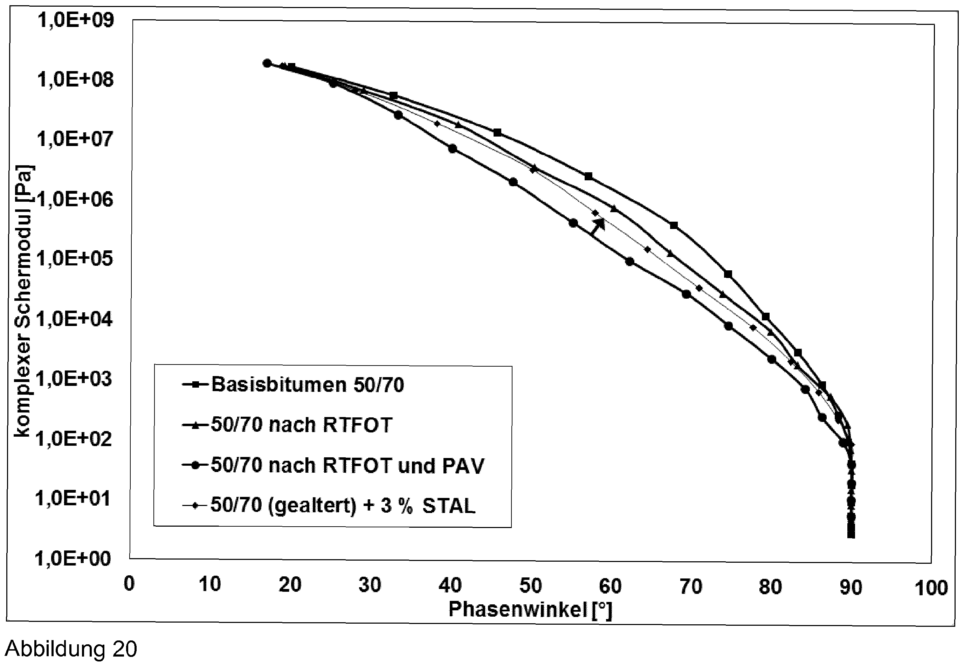

In Abbildung 20 ist das Black-Diagramm dargestellt. Dieses stellt den Phasenwinkel in Abhängigkeit des komplexen Schermoduls dar. Somit lässt sich eine Bewertung des rheologischen Zustands des Bindemittels unabhängig von der Temperatur durchführen.

Durch eine Alterung des Bindemittels verschiebt sich die Kurve im Black-Diagramm und der Grad der Alterung lässt sich durch die Verringerung des Phasenwinkels bei gleichbleibendem komplexen Schermodul erkennen. Eine verjüngende Wirkung eines Rejuvenators zeigt sich wiederum bei einer Vergrößerung des Phasenwinkels bei gleichbleibendem Schermodul. Eine Verschiebung der Kurve in Richtung des ursprünglichen Verlaufs des ungealterten Bindemittels zeigt also eine effektive, rheologisch wirksame Verjüngung des Bitumens. Eine hingegen nur rein fluxende Wirkung des Rejuvenators würde keine Verschiebung des Kurvenverlaufs in Richtung der ursprünglichen Lage bewirken (Abbildung 10).

Wie im Black-Diagramm in Abbildung 20 zu erkennen ist, führt eine Zugabe von 3 % STAL zu einer rheologisch wirksamen Verjüngung, die in Richtung des Niveaus des nach RTFOT gealterten Ausgangsbitumens führt.

### Biegebalkenrheometer

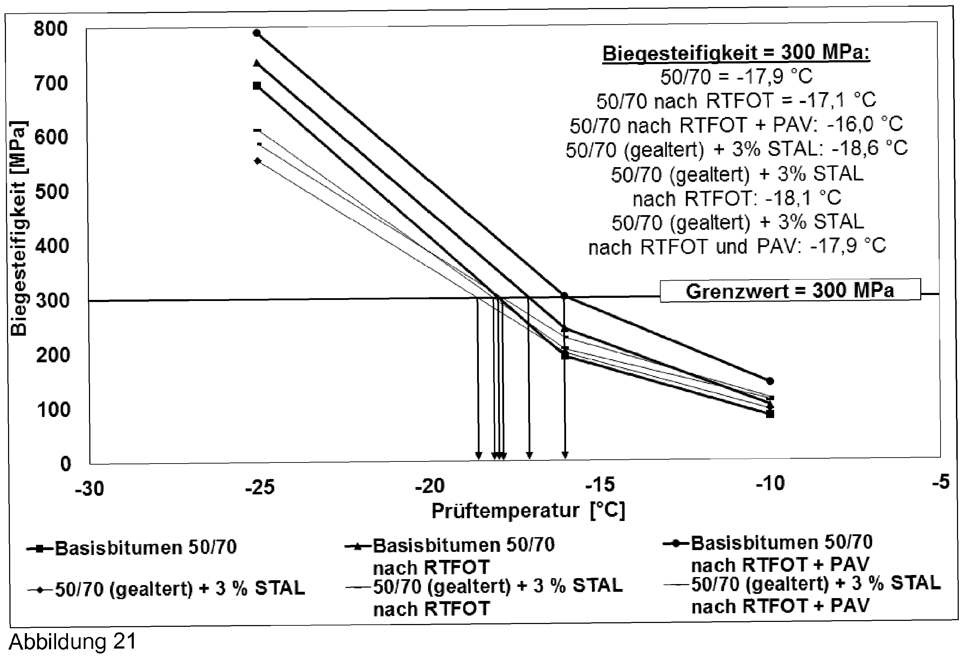

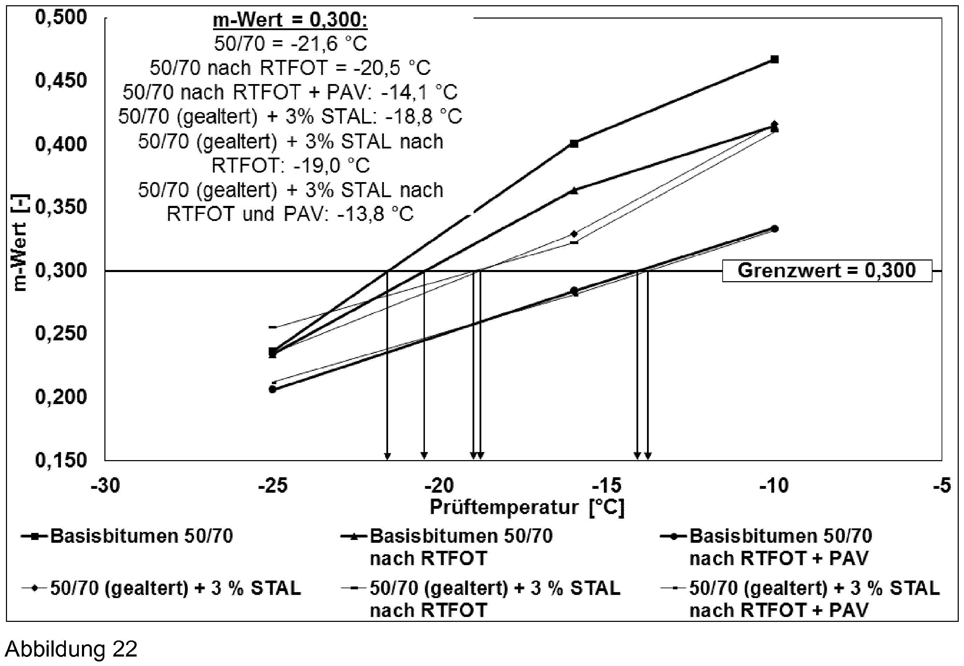

Die Untersuchungsergebnisse des Biegebalkenrheometers sind in Abbildung 21 und Abbildung 22 zusammengefasst.

Analog zu den bisherigen Untersuchungen lassen die Ergebnisse im Biegebalkenrheometer eine deutliche Verjüngung des gealterten Bindemittels durch die Zugabe von 3 % STAL erkennen.
Der Alterungseffekt zeigt sich dadurch, dass die Biegesteifigkeiten des Bindemittels durch die Alterung des Bindemittels ansteigen und wiederum durch die Zugabe des Additivs STAL verringert werden. Bei einer Prüftemperatur von -10 °C sinkt der Steifigkeitswert durch die Verjüngung wieder auf den Bereich des Ursprungswertes des Basisbitumens.

Je tiefer die Prüftemperatur ist, desto größer wird der Effekt, dass das verjüngte Bindemittel sogar geringere Steifigkeiten aufweist als das Basisbitumen. Bei -25 °C ist die Biegesteifigkeit des verjüngten und nochmals gealterten Bindemittels geringer als die des Ausgangsbitumens.

Das Abgreifen der Prüftemperatur beim Grenzwert von 300 MPa (Tabelle 6) zeigt auch eine deutliche Verbesserung durch die Zugabe von 3 % STAL. Hier liegt der Wert des verjüngten und nochmals gealterten Bindemittels im Bereich des Ausgangsbindemittels.

Der m-Wert (dargestellt in Abbildung 22) ist ein Kriterium für die Relaxationsfähigkeit des Bindemittels. Ein hoher Wert wird als gutes Tieftemperaturverhalten angesehen. Als Grenzwert wird in der Literatur oft ein Wert von 0,300 angegeben. Das Abgreifen der Prüftemperatur bei diesem Grenzwert weist auf ein gutes Relaxationsverhalten des mit 3 % STAL verjüngten Bindemittels hin.

Das mittels 3 % STAL verjüngte Bindemittel weist auch hier sehr ähnliche Werte auf wie das RTFOT-gealterte Ausgangsbitumen, zeigt allerdings bei einer Prüftemperatur von -25 °C den besten Wert.

Das verjüngte und nochmals gealterte Bindemittel liegt im Bereich des langzeitgealterten Basisbitumens und hat bei -25 °C das bessere Relaxationsverhalten.

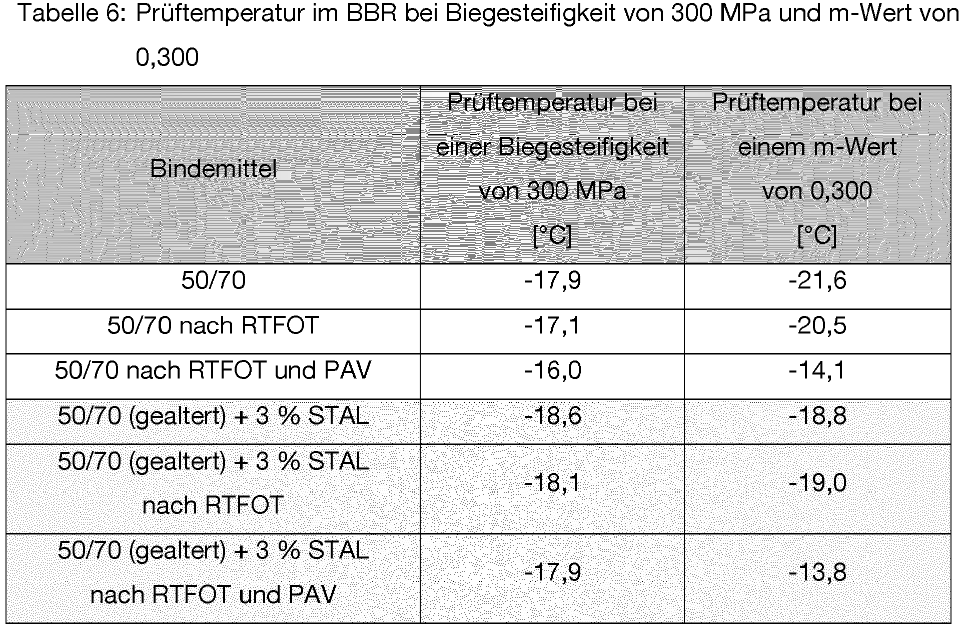

### Rolling-Bottle-Test

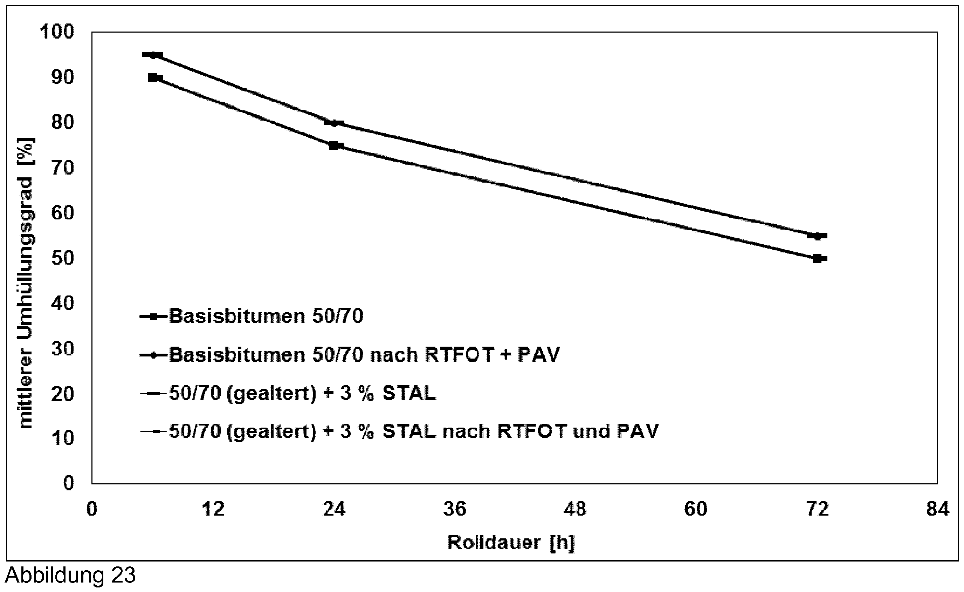

Die Untersuchungsergebnisse des Rolling-Bottle-Tests sind in Abbildung 23 dargestellt.

Die Adhäsionsversuche mittels Rolling-Bottle-Test haben gezeigt, dass das Bindemittel hinsichtlich der Affinität zum Gestein durch die Zugabe von 3 % STAL keine Veränderung der Kennwerte des Basisbitumens aufweist.

Die Affinität des Bindemittels zum Gestein ist also nach der Zugabe des Additivs STAL und weiterer Alterung durch RTFOT und PAV auf gleichbleibendem Niveau.

Zusammenfassend zeigen die Ergebnisse der durchgeführten Bindemitteluntersuchungen, dass die Zugabe des erfindungsgemäßen Additivs STAL zu einem signifikant verjüngenden Effekt, bei einem im labormaßstab gealterten Straßenbaubitumen (hier: 50/70), führt.
Die Untersuchungsergebnisse der Nadelpenetration und des Erweichungspunktes Ring und Kugel zeigen, dass die Zugabe des Additivs STAL eine signifikante Erhöhung der Nadelpenetration und eine Verringerung des Erweichungspunktes bewirkt.

Auch die Werte des komplexen Schermoduls und des Phasenwinkels im DSR weisen auf eine deutlich verjüngende Wirkung des Additivs STAL hin. Durch die Zugabe wird der komplexe Schermodul, also die Steifigkeit, herabgesetzt und der Phasenwinkel, also der viskose Anteil, steigt. Das Black-Diagramm zeigt außerdem, dass der Verjüngungseffekt als rheologisch wirksam, also nicht rein fluxend, eingestuft werden kann.

Durch die Untersuchungsergebnisse im BBR ist außerdem festzuhalten, dass das Tieftemperaturverhalten des Bindemittels durch die Zugabe des Additivs STAL verbessert wird. Die Biegesteifigkeiten werden durch STAL deutlich herabgesetzt, so dass bei einer Prüftemperatur von -25 °C geringere Biegesteifigkeiten als beim Ausgangsbitumen, selbst nach erneuter Langzeitalterung (RTFOT und PAV), festzustellen sind. Außerdem wird die Relaxationsfähigkeit durch die Zugabe des Additivs STAL erhöht.

Der Rolling-Bottle-Test hat gezeigt, dass das Adhäsionsverhalten des Bindemittels zum Gestein durch die Zugabe von 3 % STAL nicht beeinflusst wird.

Das erfindungsgemäße Additiv STAL wirkt insbesondere als Rejuvenator, aber auch als Anti-Aging-Additiv. Das erfindungsgemäße Additiv STAL verbessert die Qualität eines gealterten Bitumens, insbesondere die entscheidenden chemisch-physikalischen Eigenschaften:
- Der Verjüngungseffekt ist nachweislich rheologisch wirksam d. h., nicht fluxend, sondern verjüngend (vgl. Black-Diagramm)
- Die Zugabe von Rejuvenator STAL verjüngt das Bitumen und verringert die Alterungsgeschwindigkeit. Der Verjüngungseffekt ist durch die Verringerung des Erweichungspunktes und Erhöhung der Nadelpenetration nachgewiesen. Die Untersuchungsergebnisse nach den Alterungsstufen zeigen ebenso, dass das verjüngte Bindemittel hinsichtlich des Erweichungspunktes und der Nadelpenetration auch weniger stark altert wie das frische Ausgangsbitumen 50/70.
- Die Zugabe von nur 3 % STAL macht Langzeitalterung im PAV rückgängig
- Die Zugabe von 3 % STAL verbessert die Tieftemperatureigenschaften des gealterten Bitumens in Bezug auf die Biegesteifigkeit und die Relaxationsfähigkeit (m-Wert).
- Die Zugabe von 3 % STAL hat nach dem Rolling-Bottle-Test keine negativen Auswirkungen auf das Adhäsionsverhalten von Bitumen zum Gestein.

## Patentansprüche

1. Verwendung eines Fettalkohols oder eines Gemisches aus einem Fettalkohol und einer Fettsäure als Rejuvenator zum Verjüngen einer gealterten bitumenhaltigen Masse oder zum Verzögern des Alterungsprozesses einer bitumenhaltigen Masse, wobei die Anzahl der C-Atome zwischen 6 und 24 liegt, und wobei die Menge des Rejuvenators, bezogen auf Bitumen beziehungsweise auf ein bitumenhaltiges Bindemittel, zwischen 0,5 und 10 % beträgt.

2. Verwendung nach Anspruch 1, **dadurch gekennzeichnet, dass** es sich beim Fettalkohol beziehungsweise bei der Fettsäure jeweils um eine unverzweigte Verbindung handelt.

3. Verwendung nach einem der Ansprüche 1 oder 2, **dadurch gekennzeichnet, dass** es sich beim Fettalkohol und/oder bei der Fettsäure um eine einwertige Verbindung handelt.

4. Verwendung nach einem der Ansprüche 1 bis 3, **dadurch gekennzeichnet, dass** es sich beim Fettalkohol beziehungsweise der Fettsäure um eine gesättigte Verbindung handelt.

5. Verwendung nach einem der Ansprüche 1 bis 4, **dadurch gekennzeichnet, dass** der Fettalkohol Stearylalkohol ist.

6. Verwendung nach einem der Ansprüche 1 bis 4, **dadurch gekennzeichnet, dass** die Fettsäure Stearinsäure ist.

7. Verwendung nach einem der Ansprüche 1-6, **dadurch gekennzeichnet, dass** der Rejuvenator als weitere Komponente Cellulosefasern enthält.

8. Verwendung nach einem oder mehreren der Ansprüche 1 bis 7, **dadurch gekennzeichnet, dass** der Rejuvenator als weitere Komponenten Jute-, Hanf-, Sisal-, Flachs-, Stroh-, Textil- und/oder Holzfasern oder Kunstfasern wie Polyolefine oder anorganische Fasern wie Glasfasern enthält.

9. Verwendung nach einem der Ansprüche 1 bis 8, **dadurch gekennzeichnet, dass** der Rejuvenator als weitere Komponenten Wachse wie Montanwachse, Fischer-Tropsch-Wachse, Amid-Wachse, Polymer-Wachse, Fettsäurederivate, Polymere wie Plastomere, Elastomere, Duroplaste, Haftvermittler oder anorganische Komponenten wie Zeolithe enthält.

10. Verwendung nach einem der Ansprüche 1 bis 9, **dadurch gekennzeichnet, dass** der Rejuvenator in Gestalt von Pellets vorliegt.

## Claims

1. Use of a fatty alcohol or a mixture of a fatty alcohol and a fatty acid as a rejuvenator for rejuvenating an aged bitumen-containing composition or for retarding the aging process of a bitumen-containing composition, wherein the number of carbon atoms is between 6 and 24, and wherein the amount of the rejuvenator, based on bitumen or on a bitumen-containing binder, is between 0.5 and 10%.

2. Use according to claim 1, **characterized in that** the fatty alcohol or the fatty acid is in each case an unbranched compound.

3. Use according to one of claims 1 or 2, **characterized in that** the fatty alcohol and/or the fatty acid is a monovalent compound.

4. Use according to one of claims 1 to 3, **characterized in that** the fatty alcohol and/or the fatty acid is a saturated compound.

5. Use according to one of claims 1 to 4, **characterized in that** the fatty alcohol is stearyl alcohol.

6. Use according to one of claims 1 to 4, **characterized in that** the fatty acid is stearic acid.

7. Use according to one of claims 1 to 6, **characterized in that** the rejuvenator contains cellulose fibers as a further component.

8. Use according to one or more of claims 1 to 7, **characterized in that** the rejuvenator contains as further components jute, hemp, sisal, flax, straw, textile and/or wood fibers or synthetic fibers such as polyolefins or inorganic fibers such as glass fibers.

9. Use according to one of claims 1 to 8, **characterized in that** the rejuvenator contains as further components waxes such as montan waxes, Fischer-Tropsch waxes, amide waxes, polymer waxes, fatty acid derivatives, polymers such as plastomers, elastomers, thermosets, adhesion promoters or inorganic components such as zeolites.

10. Use according to one of claims 1 to 9, **characterized in that** the rejuvenator is in the form of pellets.

## Revendications

1. Utilisation d'un alcool gras ou d'un mélange d'un alcool gras et d'un acide gras en tant que rajeunisseur pour rajeunir une composition vieillie contenant du bitume ou pour retarder le processus de vieillissement d'une composition contenant du bitume, le nombre d'atomes de carbone étant compris entre 6 et 24, et la quantité de rajeunisseur, par rapport au bitume ou à un liant contenant du bitume, étant comprise entre 0,5 et 10 %.

2. Utilisation selon la revendication 1, **caractérisée en ce que** l'alcool gras ou l'acide gras est dans chaque cas un composé non ramifié.

3. Utilisation selon l'une des revendications 1 ou 2, **caractérisée en ce que** l'alcool gras et/ou l'acide gras est un composé monovalent.

4. Utilisation selon l'une des revendications 1 à 3, **caractérisée en ce que** l'alcool gras et/ou l'acide gras est un composé saturé.

5. Utilisation selon l'une des revendications 1 à 4, **caractérisée en ce que** l'alcool gras est de l'alcool stéarylique.

6. Utilisation selon l'une des revendications 1 à 4, **caractérisée en ce que** l'acide gras est de l'acide stéarique.

7. Utilisation selon l'une des revendications 1 à 6, **caractérisée en ce que** le rajeunisseur contient des fibres de cellulose en tant qu'autre composant.

8. Utilisation selon l'une ou plusieurs des revendications 1 à 7, **caractérisée en ce que** le rajeunisseur contient en tant qu'autres composants des fibres de jute, de chanvre, de sisal, de lin, de paille, de textile et/ou de bois ou des fibres synthétiques telles que des polyoléfines ou des fibres inorganiques telles que des fibres de verre.

9. Utilisation selon l'une des revendications 1 à 8, **caractérisée en ce que** le rajeunisseur contient en tant qu'autres composants des cires telles que des cires de montan, des cires de Fischer-Tropsch, des cires d'amide, des cires de polymère, des dérivés d'acide gras, des polymères tels que des plastomères, des élastomères, des thermodurcissables, des promoteurs d'adhésion ou des composants inorganiques tels que des zéolites.

10. Utilisation selon l'une des revendications 1 à 9, **caractérisée en ce que** le rajeunisseur se présente sous la forme de granulés.
